# EUROPÄISCHE PATENTANMELDUNG

(11) **EP 4 116 858 A1**
(43) Veröffentlichungstag der Anmeldung: **11.01.2023**
(21) Anmeldenummer: 22180350.5
(22) Anmeldetag: 22.06.2022
(51) Int. Cl.: G06F 40/284, G06N 20/00

(54) **MASCHINELLES LERNEN AUF BASIS VON DATENBANKOPERATIONEN**

(30) Priorität: 08.07.2021 DE 102021117710
(71) Anmelder: Bundesdruckerei GmbH, 10969 Berlin (DE)
(72) Erfinder: Wilke, Andreas, 13507 Berlin (DE); Komarov, Ilya, 14195 Berlin (DE); Paeschke, Manfred, 16348 Wandlitz (DE)
(74) Vertreter: Richardt Patentanwälte PartG mbB

(57) **Zusammenfassung**

Die Erfindung betrifft ein computerimplementiertes Verfahren computer-implementiertes Verfahren zur Erzeugung eines prädiktiven Modells durch maschinelles Lernen. Das Verfahren umfasst:
- Bereitstellung (1302) einer Vielzahl von Input-Datensätzen und Output-Datensätzen;
- Tokenisierung (1304) der Input-Datensätze;
- Tokenisierung (1306) der Output-Datensätze;
- Speicherung (1308) aller Inputtoken und Outputtoken jeweils verknüpft mit ein oder mehreren Datensatz-Zeigern in einer nicht-redundanten Tokenliste;
- Anwenden (1312) von Datenbank-internen Mengenoperationen auf die Zeiger in der Tokenliste um Inputtoken-Outputtoken-Tupel - im Folgenden IO-Tupel genannt - zu identifizieren, die mindestens ein Inputtoken und mindestens ein Outputtoken beinhalten, die korreliert auftreten; und
- Speichern (1314) der identifizierten IO-Tupel als Bestandteil eines prädiktiven Modells.

## Beschreibung

### Technisches Gebiet

Die Erfindung betrifft ein Verfahren und ein Computersystem zum maschinellen Lernen.

### Stand der Technik

Aus dem Stand der Technik sind Verfahren und Systeme zum maschinellen Lernen bekannt. Solche Systeme lernen anhand von Beispielen und können diese Beispiele nach Beendigung der Lernphase auf bisher unbekannte Daten anwenden. Die zugrundeliegenden Beispiele stellen Muster und Gesetzmäßigkeiten bereit, welche im Zuge eines Lerntransfers zur Beurteilung bisher unbekannter Daten herangezogen werden.

### Technisches Problem und grundlegende Lösungen

Bekannte Verfahren und Systeme für maschinelles Lernen arbeiten aufgrund der verwendeten Datenspeicherstrukturen im Allgemeinen nicht auf der gesamten zur Verfügung stehenden Datenmenge. Für das Lernen wird eine Auswahl an Beispielen getroffen, mit welchen das System in der Lernphase trainiert wird. Die aus der beschränkten Auswahl im Zuge des Lernens erfassten Muster und Gesetzmäßigkeiten werden dann sukzessiv auf Teile des restlichen Datenbestands bzw. neuerfasste Daten angewendet. Die im Zuge des Lerners erzeugten Modelle sind oftmals intransparent, sodass die Grundlage der Vorhersagen und Ausgaben des trainierten Modells oft nicht erkennbar ist. Dies macht eine Erkennung und Behebung insbesondere von sporadisch auftretenden falschen Vorhersagen schwierig. Außerdem sind die für das maschinelle Lernen verwendeten Datenstrukturen und Algorithmen oftmals in hohem Maße problemspezifisch. Das bedeutet, dass ein trainiertes prädiktives Modell oftmals auf Programmarchitekturen und Bibliotheken zurückgreift, die für die Lösung anderer Probleme nicht geeignet sind. Somit können bestehende IT-Systeme zum maschinellen Lernen oftmals in einem aufwändigen manuellen Prozess an die neue Problemstellung angepasst werden, was die Entwicklungszeit erheblich verlangsamt. So sind z.B. manche Architekturen von neuronalen Netzwerken für bestimmte Bildklassifikationsprobleme gut geeignet, für andere Probleme wie z.B. Übersetzungen oder Gesichtserkennung sind andere Architekturen (z.B. andere Anzahl und/oder Verschaltung der Layer) besser geeignet.

Außerdem erfordert der Trainingsschritt wie auch das Laden und Verwenden des trainierten Modells oftmals erhebliche Ressourcen im Hinblick auf Arbeitsspeicher und CPU Belastung, sodass die Erzeugung und/oder Nutzung von ML-basierten Modellen auf leistungsschwachen Endgeräten oftmals nicht möglich ist.

Der Erfindung liegt die Aufgabe zugrunde, ein verbessertes Verfahren zum maschinellen Lernen zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben. Ausführungsformen der Erfindung können frei miteinander kombiniert werden sofern sie sich logisch nicht ausschließen.

In einem Aspekt betrifft die Erfindung ein computer-implementiertes Verfahren zur Erzeugung eines prädiktiven Modells durch maschinelles Lernen. Das Verfahren umfasst:
- Bereitstellung einer Vielzahl von Input-Datensätzen und Output-Datensätzen, wobei jeder der Output-Datensätze einem der Input-Datensätze zugeordnet ist;
- Tokenisierung der Input-Datensätze, um für jeden der Input-Datensätze eine Liste an Inputtoken samt deren Position innerhalb ihres jeweiligen Input-Datensatzes zu erhalten;
- Tokenisierung der Output-Datensätze, um für jeden der Output-Datensätze eine Liste an Outputtoken samt deren Position innerhalb ihres jeweiligen Output-Datensatzes zu erhalten;
- Speicherung aller Inputtoken und Outputtoken in Form einer nicht-redundanten Tokenliste in einer Datenbank, wobei Elemente der Tokenliste jeweils einen der Inputtoken oder einen der Output-Token repräsentieren und wobei die Elemente jeweils Zeiger auf alle Input- oder Output- Datensätze, die das von diesem Element repräsentierte Token enthalten, sowie die Position dieses Tokens innerhalb des jeweiligen Datensatzes, enthalten;
- Anwenden von Datenbank-internen Mengenoperationen durch die Datenbank auf zumindest Teile der Einträge der Tokenliste, um Inputtoken-Outputtoken-Tupel - im Folgenden IO-Tupel genannt - zu identifizieren, die mindestens ein Inputtoken und mindestens ein Outputtoken beinhalten, wobei alle Token der Inputtoken-Outputtoken-Tupel in den einander zugeordneten Input-Datensätzen und Output-Datensätzen korreliert auftreten; es werden also diejenigen Mengen von Input- und Outputtoken als zusammengehöriges IO-Tupel identifiziert, die das Kriterium erfüllen, korreliert innerhalb von zugeordneten IO-Datensatzpaaren aufzutreten; und
- Speichern der identifizierten IO-Tupel als Bestandteil eines prädiktiven Modells, wobei das prädiktive Modell dazu ausgebildet ist, in Antwort auf eine Eingabe eines neuen Input-Datensatzes mit zumindest einem Input-Token einen neuen Output-Datensatz zurückzugeben, wobei der zurückgegebene Output-Datensatz zumindest ein Outputtoken enthält, welches dasjenige der bereits in der Tokenliste gespeicherten Outputtoken ist, das gemäß den IO-Tupeln mit dem zumindest einen Inputtoken am stärksten korreliert auftritt.

Beispielsweise kann die Tokenliste Bestandteil des prädiktiven Modells sein und die ermittelten IO-Token samt zugehörigen Zeigern und Positionen in die Tokenliste gespeichert werden. Vorzugsweise wird die Tokenliste in Form einer Datenbanktabelle in der 6. Normalform gespeichert. Die Elemente der Tokenliste können also nach der Durchführung des Lernschritts (oder in manchen Ausführungsformen, bei denen ein Nutzer einige IO-Tupel und/oder I-Tupel schon vorab bereitstellen kann, auch schon vorher) neben den Inputtoken und Outputtoken auch die durch Anwendung der Datenoperationen und/oder durch manuelle Eingabe spezifizierten Tokentupel (IO-Tupel, I-Tupel, und/oder O-Tupel) enthalten.

Beispielsweise kann die Tokenliste vor dem Lernschritt M Elemente beinhalten. Durch das Lernen wird die Liste um 60 weitere Input-Token, 25 weitere Outputtoken und 5 weitere IO-Tupel ergänzt, sodass eine neue Liste mit N=M+100 Elementen entsteht.

Das prädiktive Modell beinhaltet vorzugsweise weitere Metadaten in Form von Zählerwerten, Häufigkeitsangaben bezüglich des gemeinsamen Auftretens von Token, Tokenklassenangaben, etc., also insbesondere auch numerische und/oder statistische Daten, die durch Anwendung der Datenbankoperationen auf den Zeigern der Tokenliste erhoben wurden.

Die oben beschriebenen Schritte können z.B. eine initiale Trainingsphase beschreiben und/oder einen zu einem späteren Zeitpunkt, wenn zusätzliche Trainingsdaten vorliegen, erneut durchgeführten Trainingsvorgangs ("Retraining"). Elemente der Tokenliste können z.B. eine Mischung von Inputtoken und Output-Token und/oder IO-Tupeln beinhalten, die während der Trainingsphase identifiziert und wie oben beschrieben gespeichert werden.

Ausführungsformen der Erfindung können den Vorteil haben, dass die Datenstrukturen, die das Modell zur Berechnung von Vorhersagen (in Form des zurückgegebenen Output-Datensatzes) genutzt werden, also die Tokenliste und die durch Datenbankoperationen in einem Lernschritt identifizierten IO-Tupel, die stark korrelierende Token repräsentieren und die vorzugsweise ebenfalls in der Tokenliste gespeichert werden, sowohl generisch einsetzbar als auch inhaltlich für Menschen nachvollziehbar sind.

Viele Ansätze zum maschinellen Lernen basieren letztlich auf dem automatischen Erkennen statistischer Korrelationen. Hierfür können verschiedene mathematische Ansätze verwendet werden, zum Beispiel neuronale Netze, Supportvektormaschinen, Bayessche Klassifizierer u.a. Viele dieser Verfahren haben allerdings den Nachteil, dass sie automatisch erlernten Korrelationen in der Netzwerkarchitektur bzw. sonstigen Datenstruktur des in der Lernphase erzeugten Modells verborgen sind. Sie können von einem Nutzer nicht eingesehen und nachvollzogen werden. Damit hat der Nutzer nicht Möglichkeit, fehlerhaft erkannte statistische Korrelationen nachträglich zu korrigieren und/oder bereits vorab zu erkennen.

Der Inhalt von Tokenlisten, die zum Beispiel in Form ein oder mehrerer Datenbanktabellen realisiert sein können, hat dagegen eine Struktur, die mittels üblicher Datenbankverwaltung-Tools von einem Betreiber der Datenbank eingesehen und gegebenenfalls verändert werden kann. Auch IO-Tupel, die in einer solchen Liste verknüpft mit Zeigern auf die in den IO-Tupel enthaltenen Inputtoken oder Outputtoken enthalten sind, können von einem Nutzer eingesehen und ggf. korrigiert werden, z.B. indem einzelne Token eines IO-Tupels gelöscht oder hinzugefügt werden.

Außerdem kann das Verfahren generisch zur Erzeugung prädiktiver Modelle für eine Vielzahl von Fragestellungen verwendet werden. In den IO-Tupeln verdichtet sich das automatisch auf Basis initial bereitgestellter, einander zugeordneter Input-Datensätze und Output-Datensätze erlernte Wissen über Korrelationen bestimmter Inputtoken und Outputtoken. Die Berechnung der IO-Tupel erfolgt unter Anwendung von Datenbankoperationen auf die Elemente der Tokenliste. Die verwendeten Datenstrukturen sind hochgradig generisch und können zur automatischen Bereitstellung prädiktiver Modelle für völlig verschiedene Problemstellungen genutzt werden. Beispielsweise können die Token Wörter innerhalb natürlichsprachliche Sätze darstellen und das Modell kann dazu genutzt werden, Eingangssätze in einer bestimmten Sprache in eine Zielsprache zu übersetzen. Genauso ist es möglich, dass die Token Zustände oder Zustandsänderungen von Systemkomponenten repräsentieren und das Modell dazu ausgebildet ist, Kombinationen bestimmter Komponenten-Zustände zu erkennen, die zu einem bestimmten Zustand des Gesamtsystems (zum Beispiel verringerte Gesamtkapazität, verminderte Arbeitsfähigkeit, kompletter Ausfall, erhöhte Latenzzeit etc.) führen oder in der Zukunft führen werden.

In einem weiteren vorteilhaften Aspekt können gemäß Ausführungsformen alle oder zumindest wesentliche Schritte der Erzeugung des prädiktiven Modells innerhalb einer Datenbank, also unter Nutzung vordefinierter Operationen der Datenbank, erzeugt werden. Datenbanken zeichnen sich in der Regel durch einen im Vergleich zu Anwendungsprogrammen reduzierten Satz an Operationen aus, welche auf Daten bzw. Datenobjekten ausgeführt werden können. Auch ist die Vielfalt möglicher Strukturen der von Datenbankprogrammen verwalteten Datenobjekte im Vergleich zu Anwendungsprogrammen stark reduziert: in der Regel müssen Datenobjekt bestimmten Feldern von Datenbanktabellen gespeichert werden, komplexe Datenobjekte werden gegebenenfalls unter Nutzung von Zeigern in mehreren Datenbanktabellen gespeichert. Allerdings sind die wenigen von einer Datenbank unterstützten Operationen daraufhin optimiert, eine große Menge von Daten in sehr kurzer Zeit bei geringem rechnerischen Aufwand zu bewältigen. Insofern können Ausführungsformen der Erfindung auf den Vorteil haben, dass sehr große Trainingsdatensätze, bestehend aus Input-Datensätzen und diesen jeweils zugeordneten Output-Datensätzen, auf sehr schnelle Weise genutzt werden können, um aufbauend auf diesen ein prädiktives Modell abzuleiten. Auch das Modell selbst hat gemäß Ausführungsformen der Erfindung eine Struktur, die es erlaubt, das Modell in der Datenbank zu speichern. In diesem Fall können die Vorteile einer Datenbank, insbesondere die Fähigkeit der schnellen Verarbeitung großer Datenmengen und definierte Import/Export Schnittstellen nicht nur zur Erzeugung, sondern auch zur Speicherung und Verwaltung (Einschließlich des Imports und/oder Exports) des prädiktiven Modells genutzt werden.

Beispielsweise kann zur Erzeugung des prädiktiven Modells zunächst ein Trainingsdatensatz bereitgestellt und in die Datenbank gespeichert werden. Der Trainingsdatensatz umfasst die Vielzahl der Input-Datensätze und die Vielzahl der diesen zugeordneten Output-Datensätze. Die Datenbank oder ein Programm, das Zugriff auf die Datenbank hat, kann zur Tokenisierung der einzelnen Datensätze und zur Speicherung der Token in die Tokenliste verwendet werden. Die Datenbank erstellt daraufhin durch eine auf den Elementen der Tokenliste durchgeführte Korrelationsanalyse eine Menge an IO-Tupeln und speichert diese als Bestandteil des prädiktiven Modells wiederum in der Datenbank ab. Die IO-Tupel beinhalten ein oder mehrere Input -Token und ein oder mehrere Output-Token, die innerhalb einander zugeordneter Input-Output-Datensätze deutlich korreliert auftreten. Die IO-Tupel beinhalten somit Wissen über statistische Zusammenhänge, die durch automatische Analyse des Trainingsdatensatzes gewonnen wurden. Auf Basis dieses in den IO-Tupeln gespeicherten kann das Modell für neue, in Trainingsdatensatz noch nicht enthaltene Input-Datensätze einen Output-Datensatz erzeugen, der diejenigen Output-Token enthält, die aufgrund der erlernten und in den IO-Tupeln gespeicherten Korrelationen statistisch zu erwarten sind.

Ausführungsformen der Erfindung können weiterhin den Vorteil haben, dass in den I-Tupeln auch Positionsinformationen bezüglich der Position der einzelnen Token innerhalb verschiedener Input- oder Output-Datensätze enthalten sind. Es wurde beobachtet, dass diese Positionsinformation bei sehr vielen Vorhersageproblemen relevant ist. Eine Berücksichtigung der Token-Positionsinformation bei der automatischen Erstellung der IO-Tupel hilft, die Qualität des Modells zu verbessern. Beispielsweise kann das Verfahren vorsehen, dass Token, die zwar rein statistisch gesehen deutlich korreliert in den Datensätzen auftreten und somit die Mindesterfordernisse im Hinblick an die Korreliertheit zur Erzeugung eines IO-Tupels erfüllen, dennoch nicht in Form eines neuen IO-Tupels im Modell repräsentiert werden, wenn anhand der Tokenpositionen beobachtet wird, dass deren Abstände sehr groß sind. Auch Position dazu genutzt werden, ein bestimmtes IO-Tupel als nicht in einem neuen Input-Datensatz enthalten anzusehen, obwohl alle Token dieses IO-Tupels in dem neuen Input-Datensatz vorkommen, wenn die Abstände der Token in dem neuen Input-Datensatz deutlich größer sind als z.B. aggregierte relative Abstände der Token innerhalb des besagten IO-Tupels des Modells. Die Berücksichtigung von Position dazu beitragen, die Qualität des Modells und dessen Vorhersagen zu erhöhen.

In manchen Ausführungsformen werden die Zeiger in einem auf die Hardware, insbesondere die Prozessorarchitektur abgestimmten Datenformat gespeichert, sodass die Datenbankoperationen besonders effizient auch auf leistungsschwachen Geräten durchgeführt werden können.

Nach Ausführungsformen der Erfindung werden die identifizierten IO-Tupel und optional weitere durch die Mengenoperationen identifizierte Token-Tupel in der Tokenliste gespeichert. Die Tokenliste ist Bestandteil des prädiktiven Modells.

Die gemeinsame Speicherung von Inputtoken, Outputtoken, IO-Tupeln, I-Tupeln und/oder O-Tupeln in der gleichen Datenstruktur und auf gleiche Weise als Listenelement kann den Vorteil haben, dass auch die Datenbankoperationen unterschiedslos auf Paare jeglicher Kombination von Inputtoken, Outupttoken, I-Tupeln, O-Tupeln und IO-Tupeln ausgeführt werden können. Es können somit durch Datenbankoperationen des im Wesentlichen gleichen Typs sowohl Korrelationen von Token und Tupeln innerhalb von Inputdatensätzen, innerhalb von Outputdatensätzen, wie auch zwischen Input- und Outputdatensätzen auf schnelle, nachvollziehbare und einheitliche Weise ermittelt und als "gelerntes Wissen" in Form zusätzlich erkannter Token und Token-Tupel in der Liste gespeichert werden, sodass die Liste und damit das Modell bei jedem weiteren Lernschritt erweitert werden kann.

Nach Ausführungsformen der Erfindung sind die Zeiger, die mit jedem Element der Tokenliste verknüpft gespeichert sind, je innerhalb eines Arrays von Zeigern vorgegebener Länge gespeichert.

Nach Ausführungsformen sind die Vielzahl von Input-Datensätzen und Output-Datensätzen bei ihrer Bereitstellung verteilt in verschiedenen Datenbanken gespeichert. Zumindest zwei der Datenbanken sind auf verschiedenen Datenverarbeitungsgeräten instanziiert, die über ein Netzwerk miteinander verbunden sind, wobei die Zeiger in der Tokenliste jeweils eine Adresse bezeichnen, die neben dem Datensatz auch die Datenbank und das Computersystem identifiziert, welche den Datensatz beinhaltet.

Dies kann vorteilhaft sein, da somit Datensätze für Trainingszwecke über ein Netzwerk bereitgestellt und verwendet werden können, für welche keine Gefahr für Konflikte aufgrund redundanter und damit nicht eindeutiger Zeiger besteht.

Außerdem können nach Ausführungsformen diese Zeiger dafür verwendet werden, die Input- und Output-Datensätze über das Netzwerk in Kopie einzulesen. In diesem Fall sorgt die Beschaffenheit der Zeiger dafür, dass das Computersystem, das einen Datensatz ursprünglich erfasst oder anderweitig erhoben hat, identifizierbar bleibt, sodass ggf. auch komplexere Analysen zur Identifikation quellsystemspezifischer Effekte möglich sind.

Nach Ausführungsformen der Erfindung bezeichnen die Zeiger in der Tokenliste jeweils eine Adresse einer vordefinierten Bitlänge. Eine erste Reihe ein oder mehrerer Bitpositionen der Bitlänge identifiziert eine Hardwareadresse eines Datenverarbeitungsgeräts, welches den Datensatz erfasst hat und/oder aktuell bereitstellt. Zusätzlich oder alternativ dazu identifiziert eine zweite Reihe ein oder mehrerer Bitpositionen der Bitlänge die Datenbank, welches den Datensatz beinhaltet. Zusätzlich oder alternativ dazu identifiziert eine dritte Reihe ein oder mehrerer Bitpositionen der Bitlänge den Datensatz innerhalb der Datenbank.

Das hier beschriebene Kodierungsschema zur Kodierung der Adressinformation der Datensätze bei der Erzeugung eines Zeigers zu diesem Datensatz kann vorteilhaft sein, da es sehr stark komprimiert ist. Es wird als nicht etwa eine URL verwendet, also ein String bzw. eine ASCI Zeichensequenz, sondern es werden relevante Adressinformationen auf der Ebene einzelner Bits codiert. Hierbei bestimmt die Anzahl der zu integrierenden Computersysteme, Datenbanken und Datensätze die für die jeweiligen Adressbestandteile mindestens erforderliche Anzahl an Bitpositionen.

Vorzugsweise wird das Kodierungsschema jedoch so gewählt, dass auch eine Integration weiterer Computersysteme, Datenbanken und Datensätzen möglich ist, wobei die Bitlänge jedoch vorzugsweise nicht größer als nötig und/oder nicht größer als die Registerspeichergröße der jeweiligen Prozessorarchitektur gewählt ist.

Dies kann vorteilhaft sein, da hierdurch eine sehr große Menge an Zeigern zur Durchführung der Mengenoperationen in den Arbeitsspeicher geladen werden können, ohne dass hierdurch viel Arbeitsspeicher reserviert werden müsste. Auch die Größe des prädiktiven Modells, das die Tokenliste enthält, wird reduziert. Gemäß Ausführungsformen wird das Modell zum Zwecke der Synchronisation zweier typgleicher aber auf unterschiedlichen Trainingsdatensätzen erzeugten Modellen über ein Netzwerk von einem ersten an ein zweites Computersystem (jeweils z.B. ausgebildet als Endgerät eines Nutzers, Notebook, Smartphone, Desktopcomputer, Servercomputer, Cloud-Computersystem) übertragen, um die beiden Modelle zu verschmelzen ("mergen") und damit zu synchronisieren. Hier ist eine geringe Größe des Modells besonders vorteilhaft, da hierdurch der Datenverkehr reduziert wird und die Taktung der Synchronisationszyklen ggf. erhöht werden kann.

Nach Ausführungsformen umfasst das Verfahren eine automatische Identifikation der Registergröße der Prozessorarchitektur von ein oder mehreren Prozessoren des Computersystems, auf welchem die Datenbank mit der Tokenliste instanziiert ist. Die Registergröße kann insbesondere 32Bit, 64 Bit, 128 Bit, 256 Bit oder 512 Bit betragen. Die Zeiger werden durch die Software, die das Modell erzeugt ("Lernsoftware") für die Speicherung in der Tokenliste so kodiert, dass die vordefinierte Bitlänge jedes Zeigers der identifizierten Registergröße entspricht.

Dies kann vorteilhaft sein, da die Größe der Zeiger auf die jeweilige Prozessorarchitektur abgestimmt werden kann. Hierdurch wird eine optimale Ausnutzung des verfügbaren Registerspeichers und eine Minimierung der Größe der in den Arbeitsspeicher geladenen Zeiger ermöglicht.

Gemäß Ausführungsformen der Erfindung werden mehrere Computersysteme, die jeweils gekoppelt sind an eine Datenbank mit einer lokal erstellten und erweiterten Tokenliste und die jeweils eine Lernsoftware zur Erzeugung und Erweiterung eines die lokale Tokenliste beinhaltenden prädiktiven Modells, zu einem verteilten Computersystem miteinander verbunden. Die Lernsoftware der jeweiligen Datenverarbeitungsgeräte ist dazu ausgebildet, die Modelle über ein Netzwerk mit anderen Computersystemen auszutauschen. Vorzugsweise haben die Prozessorarchitekturen sämtlicher in dem verteilten Computersystem miteinander verbunden Computersystemen die gleiche Registergröße und/oder verwenden das gleiche Kodierungsschema für die Erzeugung der Zeiger.

Gemäß Ausführungsformen der Erfindung ist es möglich, dass zumindest einige der IO-Tupel von einem Nutzer schon vor oder während der Lernphase manuell vorgegeben wurden. Beispielsweise kann diese manuelle Vorgabe sinnvoll sein, wenn der Nutzer bestimmte Tokenkorrelationen schon von vornherein bekannt sind, die von dem prädiktiven Modell berücksichtigt werden sollen.

Nach der initialen Erzeugung des prädiktiven Modells auf Basis eines Trainingsdatensatzes mit vielen Input-Datensätzen und zugeordneten Output-Datensätzen kann das Modell nun in der Praxis verwendet werden, um Output-Datensätze für neue, bislang unbekannte Input-Datensätze zu berechnen. Typischerweise ist dafür erforderlich, dass der neue Input-Datensatz zumindest einige Input-Token enthält, die bereits in dem zum initialen Training verwendeten Satz an Input-Datensätzen enthalten waren (wobei diese Input-Token nicht innerhalb des gleichen Input-Datensatzes auftreten mussten).

Nach Ausführungsformen der Erfindung umfasst das Verfahren folgende Schritte:
- Empfang des neuen Input-Datensatzes;
- Tokenisierung des neuen Input-Datensatzes, um weitere Inputtoken samt deren Position innerhalb des neuen Input-Datensatzes zu erhalten;
- Anwendung des prädiktiven Modells auf die weiteren Inputtoken, um den neuen Output-Datensatz zu erzeugen; und
- Zurückgabe des neuen Output-Datensatzes.

Beispielsweise kann ein natürlichsprachlicher Satz einer Ausgangssprache als neue Input-Datensatz bereitgestellt werden. Dieser wird von einem Tokenisierungsmodul dieser Ausgangssprache in eine Reihe von Wörtern tokenisiert. Einige oder alle der Inputtoken sind dem Modell bereits bekannt und innerhalb der Tokenliste gespeichert. Unbekannte Wörter werden der Tokenliste hinzugefügt. Anhand der Zuordnung von Input-Token (Wörter der Ausgangssprache) zu Output-Token (Wörter der Zielsprache), die in den IO-Tupeln des Modells gespeichert sind, und vorzugsweise unter Berücksichtigung der Wortpositionen, erkennt das Modell die statistisch wahrscheinlichsten Wörter der Zielsprache und gibt eine Übersetzung des empfangenen neuen Input-Datensatzes in die Zielsprache aus.

Je nach Art der Datenbank kann die Korrelationsanalyse vollständig durch die Datenbank durchgeführt werden oder die Korrelationsanalyse wird durch ein mit der Datenbank interoperables Programm durchgeführt, wobei aber zumindest die INTERSECT ("Schnittmengenbildungs"-) Operationen zur Ermittlung von Datensätzen, in welchen zwei oder mehrere Token gemeinsam auftreten, von der Datenbank durchgeführt wird.

Hierdurch kann die Korrelationsanalyse sehr effizient auf einem umfangreichen Datensatz auch durch vergleichsweise leistungsschwache Datenverarbeitungsgeräte durchgeführt werden. Insbesondere durch Anwenden der INTERSECT Operation (Schnittmengenermittlung) auf Adressen von Datensätzen vorgegebener, identischer Länge, kann eine hohe Rechengeschwindigkeit bei geringer CPU Belastung erzielt werden.

Nach Ausführungsformen der Erfindung umfasst das Verfahren ein Bereitstellen einer grafischen Benutzeroberfläche (GUI). Die GUI ermöglicht es einem Nutzer, die IO-Tupel zu modifizieren, zu löschen und/oder zu ergänzen. Optional kann sie dem Nutzer auch erlauben, weitere Inputtoken, Outputtoken, I-Tupel und/oder O-Tupel und/oder weitere Kriterien zu definieren, die erfüllt sein müssen, damit das Modell entscheidet, ein bestimmtes Token oder Tupel komme in einem Datensatz, z.B. einem neuen Input-Datensatz, vor. Beispielsweise können bestimmte Maximalabstände oder bestimmte relative Abstände für die Tokenpositionen definiert werden, die zusätzlich zum Auftreten der einzelnen Token des IO-Tupels zusätzlich erfüllt sein müssen, damit das Modell ein Auftreten des IO-Tupels in einem neuen Input-Datensatz "erkennt". Nach Ausführungsformen überprüft das Modell, wenn es auf einen neuen Input-Datensatz angewandt wird, zumindest, ob alle Input-Token des Modells in dem Datensatz auftreten. Optional kann es prüfen, ob Zusatzkriterien erfüllt sind, z.B. im Hinblick auf das Mindestmaß an Korreliertheit dieser Inputtoken, und/oder im Hinblick auf die Positionen und/oder Abstände dieser Inputtoken. Falls das Modell erkennt, dass anhand dieser Kriterien ein "IO-Tupel", also genauer gesagt die Inputtoken dieses IO-Tupels, in einem neuen Datensatz enthalten ist und optional vorhandene weitere Kriterien (Grad der Korreliertheit, Abstände, etc.) erfüllt sind, gibt das Modell das oder die Output-Token dieses "erkannten" IO-Tupels zurück.

Nach Ausführungsformen der Erfindung wird jedes der IO-Tupel verknüpft mit Zeigern auf alle Input-Datensätze und die diesen zugeordneten Output-Datensätze, in welchen die Inputtoken und Outputtoken dieses IO-Tupels enthalten sind, gespeichert. Jedes der IO-Tupel enthält zudem die Positionen der Inputtoken innerhalb dieser Input-Datensätze und die Positionen der Outputtoken innerhalb dieser Output-Datensätze.

Nach Ausführungsformen der Erfindung enthält jeder tokenbezogene und/oder tupelbezogene Eintrag der Tokenliste Zeiger (auch "Referenzen" genannt) auf alle Input- oder Output- Datensätze, in denen dieses Input- oder Output-Token oder das Tokentupel vorkam. Jeder der Einträge der Tokenliste enthält zudem die Positionen der jeweiligen Token innerhalb der Datensätze, in welchen sie beobachtet wurden.

Dies kann vorteilhaft sein, da die Zeiger nicht nur den Bezug auf die ursprüngliche Datenquelle offenbaren, sondern die Anzahl der Zeiger zudem die absolute Häufigkeit der Token in der Gesamtheit der Input-Datensätze oder Output- Datensätze offenbart. Diese Information kann für die Entscheidung, ob zwei oder mehr Token statistisch gesehen in hinreichendem Maße über den zufälligen Erwartungswert hinaus korrelieren.

Beispielsweise kann es sich bei den Input-Datensätzen um einzelne natürlichsprachliche Sätze einer bestimmten Sprache handeln. Die Output-Datensätze können einzelne natürlichsprachliche Sätze einer Zielsprache sein, die jeweils doch Übersetzung eines der Input-Sätze in die Zielsprache erzeugt wurde. Jeder dieser natürlichsprachlichen Input-Sätze bzw. Output-Sätze/Übersetzungs-Sätze kann als eigener Datenbankeintrag mit einem automatisch erzeugten Primärschlüssel in einer oder mehreren Tabellen gespeichert werden. Bei den Zeigern kann es sich also um Sekundärschlüssel handeln, welche auf diese Primärschlüssel verweisen. Bei den einzelnen Token kann es sich um einzelne Wörter der jeweiligen Ausgangs- bzw. Zielsprache handeln. Bei den Tokenpositionen handelt es sich um die Position dieses Tokens (Wortes) innerhalb eines natürlichsprachlichen Satzes, der als eine Sequenz von Token verarbeitet wird.

Gemäß eines anderen Beispiels kann es sich bei den Input-Datensätzen jeweils um eine Logdatei handeln, wobei jede Logdatei eine Sequenz aus automatisch erzeugten Meldungen bezüglich des Status eines technischen Systems und/oder dessen Komponenten beinhaltet. Die einzelnen Token können einzelne Meldungen innerhalb dieser Logdatei darstellen. Beispielsweise kann jede neue Meldung in einer neuen Zeile der Logdatei gespeichert sein. Bei den Output-Datensätzen kann es sich um aggregierte Systemzustände handeln, welches sich kausal aus dem Zusammenwirken der besagten Komponenten und deren Zuständen ergeben. Beispielsweise beinhalten komplexe Cloud-Computersysteme eine Vielzahl von Hardwarekomponenten wie zum Beispiel Prozessoren, Netzwerkkarten, Proxy-Server, Arbeitsspeicher, nicht-monatiger Speicher, RAID Controller usw. Die verschiedenen Komponenten sind operativ und/oder physisch aneinander gekoppelt und führen eine Vielzahl von Arbeitsstätten aus, die teilweise voneinander abhängig sind und deren zeitliche Orchestrierung oftmals sehr komplex ist, zum Beispiel um einem Cloud-Computersystem oder sonstigem Server-System zu ermöglichen, flexibel auf eine Vielzahl von nicht vorhersehbaren Client-Anfragen zu reagieren. Zudem beinhalten solche Systeme oftmals mehrere Komponenten des gleichen Typs aber unterschiedlicher Hersteller (zum Beispiel verschiedene Netzwerkkarten oder RAID-Controller verschiedener Hersteller). Es kann also zu Konflikten und damit verbunden zu Störungen in komplexen, verteilten IT-Systemen kommen, deren Identifikation insbesondere bei sporadischem Auftreten der Störungen eine große Herausforderung ist. Ausführungsformen der Erfindung können dazu verwendet werden, solche Zusammenhänge zu erkennen. Alles was hierfür benötigt wird, ist eine hinreichend große Menge an Logdaten der einzelnen Systemkomponenten und der zu diesen Logdaten zeitlich korrespondierenden Systemzustände des komplexen verteilten IT-Systems. Zu den Systemzuständen können zum Beispiel "bereit", "fehlerhaft", "nicht erreichbar", "überlastet", oder dergleichen gehören. Ausführungsformen der Erfindung können nicht nur zum Erkennen von Fehlerursachen in komplexen technischen Systemen (verteilte IT-Systeme, Produktionsstraßen, komplexe chemische Syntheseverfahren oder Analyseverfahren und entsprechende Maschinen, etc.), sondern auch zur Vorhersage des Eintritts eines Fehlers. Der vorhergesagte Fehler kann einen Nutzer gemeldet werden, um es diesem zu ermöglichen, präventiv geeignete Maßnahmen zu ergreifen.

Nach Ausführungsformen der Erfindung beinhalten die identifizierten IO-Tupel eines oder mehrere der folgenden IO-Tupel-Typen:
- IO-Tupel mit genau einem Inputtoken und genau einem Outputtoken;
- IO-Tupel mit mehr als einem Inputtoken;
- IO-Tupel mit mehr als einem Outputtoken;
- IO-Tupel mit einer unterschiedlichen Anzahl von Inputtoken und Outputtoken;
- IO-Tupel mit einer identischer Anzahl von Inputtoken und Outputtoken;
- IO-Tupel die zwei oder mehrere der oben genannten Eigenschaften aufweisen.

Der Umstand, dass die IO-Tupel des Modells gemäß Ausführungsformen der Erfindung sehr viele unterschiedliche Formen haben können, also z.B. {2 Inputtoken, 2 Outputtoken}, {3 Inputtoken, 1 Outputtoken},{2 Inputtoken, 4 Outputtoken}, kann vorteilhaft sein, da das Modell dadurch sehr flexibel verschiedene statistische Szenarien abdecken kann. Beispielsweise tritt bei Übersetzungen häufig, aber nicht immer, die Situation auf, dass n Wörter einer Wortkombination auch n Wörtern der Zielsprache entsprechen. Der Ausdruck "habe ... gebaut" tritt in deutschen Texten vielfach auf und korrespondiert zu den beiden englischen Wörtern "have....built". Andererseits kann die Anzahl der Wörter in Ausgangs- und Zielsprache abweichend sein. Der deutsche Ausdruck "Zusammengefasst" wird oft als "Put in a nutshell" übersetzt. Hier korrespondiert also ein Inputtoken zu vier Outputtoken.

Gemäß einer anderen Ausführungsform kann das prädiktive Modell so trainiert und eingesetzt werden, dass es Systemzustände erkennt oder vorhersagt. Beispielsweise kann ein komplexes System, z.B. eine technische Anlage für die Energieerzeugung oder die Produktion von Gütern mit 10 Kühlaggregaten betrieben werden. Der Ausfall von bis zu drei Kühlaggregaten kann von den übrigen Kühlaggregaten kompensiert werden, aber ab dem Ausfall von vier Kühlaggregaten springt das Notkühlsystem an (weil die Anlage im praktischen Betrieb bei gegebener Auslastung und Außentemperatur ab da mit den verbliebenen Kühlaggregaten die Temperatur nicht mehr aufrechterhalten kann). Ein IO-Tupel, das diesen Kausalzusammenhang erfasst, würde vier Inputtoken beinhalten, die jeweils einen Log-Eintrag bezüglich des Ausfalls eines einzelnen Kühlaggregats beinhalten, und ein Outputtoken, das das Hochfahren des Notkühlaggregats repräsentiert.

Nach Ausführungsformen der Erfindung umfasst das Verfahren ferner:
- Identifikation eines bereits im prädiktiven Modell enthaltenen IO-Tupels, dessen Inputtoken sämtlich in dem neuen Input-Datensatz enthalten sind, und das mindestens zwei Output-Token enthält;
- Anwenden von Datenbank-internen arithmetischen Operatoren durch die Datenbank auf die Positionen der zumindest zwei Outputtokens des identifizierten IO-Tupels in mehreren der Output-Datensätze, um eine aggregierte relative Position der zumindest zwei Output-Token dieses IO-Tupels zu bestimmen; und
- Erzeugung des zurückgegebenen Output-Datensatzes so, dass dieser die zwei oder mehr Outputtoken an einer bestimmten relativen Position zueinander beinhaltet, wobei die bestimmte relative Position die aggregierte relative Position ist oder als Funktion der aggregierten relativen Position berechnet wird.

Beispielsweise kann der neue Input-Datensatz den Ausdruck "habe ... gebaut" enthalten. Es wird ein IO-Tupel identifiziert, der eine Übersetzung dieses Ausdrucks in Form einer Zuweisung der zwei Inputtoken "habe" und "gebaut" zu zwei Outputtoken "have" und "built" beinhaltet. Die Inputtoken "habe" und "gebaut" verweisen auf eine Vielzahl von Input-Datensätzen, in welchen diese jeweils vorkommen. Durch eine INTERSECT Operation auf diese Zeiger kann die Anzahl der Input-Datensätze, die beide Token enthalten, schnell bestimmt werden. Die durch die INTERSECT Operation erhaltene Liste an Zeigern ("Vorkommensliste") kann beispielsweise im Zuge der Erzeugung des IO-Tupels berechnet und verknüpft mit dem IO-Tupel gespeichert werden. Beispielsweise kann der Trainingsdatensatz 1000 Input-Datensätze enthalten, welche die Inputtoken "habe" und "gebaut" enthalten. Der aggregierte Abstand der beiden Token kann z.B. als gerundeter arithmetischer Mittelwert der tatsächlich beobachteten Tokenabstände zwischen "habe" und "gebaut" in den 1000 Sätzen berechnet werden und z.B. "2" betragen. In analoger Weise wird ein aggregierter relativer Abstand der Outputtoken "have" und "built" durch Analyse der Positionen dieser beiden Token in den zum Training verwendeten Output-Datensätzen bestimmt. Dieser kann z.B. "0" betragen. Der vom Modell zurückgegebene neue Output-Datensatz würde also das Output-Token "built" unmittelbar nach dem Output-Token "have" enthalten, da die aggregierte relative Position dieser beiden Token einen Abstand von "0" anzeigt.

Bei IO-Tupeln, die nur ein einziges Inputtoken und/oder ein einziges Outputtoken enthalten, kann die absolute Position dieses Tokens relativ zum Satzanfang als die "relative Tokenposition" verwendet werden.

Die Position des Output-Tokens "have" kann auf verschiedenen Wegen automatisch bestimmt werden. Die Bestimmung kann z.B. auf Basis einer aggregierten absoluten Positionsangabe ("über 90 % der "have" Token in den Output-Datensätzen befinden sich an Position X des Satzes"), oder auf Basis einer Tokentypklassifizierung (z.B. "have" ist ein Verb und befindet sich an Position X eines Satzes). Die Position des Output-Tokens "have" kann auch auf Basis einer aggregierten relativen Position bestimmt werden. Beispielsweise kann der IO-Tupel zudem das Wort "I" beinhalten und da in >80% aller Sätzen, die die Token "I", "have" und "built" beinhalten, "have" unmittelbar nach "I" kommt, wäre der Abstand zwischen "I" und "have" "0".

Beispielsweise können die Arithmetischen Operationen, die die Datenbank auf den Positionsangaben durchführt, um zu prüfen, ob die in einem Datensatz erkannten Token bestimmte vorgegebene Abstände (relative Positionen) beinhalten, als Multidimensional Expressions (MDX) Ausdrücke spezifiziert sein. MDX ist eine Datenbanksprache für OLAP-Datenbanken. Sie wurde von Microsoft entwickelt und etabliert sich als Industriestandard. MDX wird als standardisierte Abfragesprache von OLE DB for OLAP (ODBO) und XML for Analysis verwendet. MDX unterstützt eine Vielzahl arithmetischer Operatoren, z.B. Addition, Subtraktion, Multiplikation und Division numerischer Werte, z.B. Positionsangaben. Aber auch die meisten Datenbanken, die nicht MDX unterstützen, bieten die Möglichkeit, arithmetische Operationen auf sehr effiziente Weise auf einer großen Anzahl numerischer Werte durchzuführen.

Nach Ausführungsformen umfasst das Verfahren ferner ein Anwenden von Datenbank-internen Mengenoperationen durch die Datenbank auf die Zeiger in der Tokenliste, um Inputtoken-Tupel - im Folgenden I-Tupel - zu identifizieren, die mindestens zwei Inputtoken beinhalten, wobei alle Inputtoken der I-Tupel in der Vielzahl der Input-Datensätze korreliert auftreten.

Im Gegensatz zu IO-Tupeln beinhalten I-Tupel also ausschließlich Inputtoken, also Token, die aus Input-Datensätzen gewonnen wurden.

Das Verfahren kann ferner ein Speichern der identifizierten I-Tupel als Bestandteil eines prädiktiven Modells und ein Verwenden zumindest einiger der I-Tupel als Basis bei der Identifikation der IO-Tupel umfassen. Die in einem I-Tupel enthaltenen Inputtoken können z.B. einige oder alle Inputtoken eines im Zuge eines in einem späteren Trainingsschritt automatisch identifizierten IO-Tupel stellen. Die Outputtoken sind diejenigen der Outputtoken der Tokenliste, die in den einander zugeordneten Input-Datensätzen und Output-Datensätzen korreliert auftreten.

Ausführungsformen der Erfindung können vorteilhaft sein, da sie einen Lerneffekt auch während der normalen Anwendung des bereits trainierten Modells auf Inputdatensätze ermöglichen. Während die automatische Identifizierung von IO-Tupeln auf Basis zugeordneter Input-Outputdatensätzen erfolgt, können I-Tupel auch rein auf Basis von Input-Datensätzen erkannt werden, die dem bereits trainierten Modell zu Vorhersagezwecken zur Verfügung gestellt werden. Da die I-Tupel genau so wie Input-Token als Basis zur Identifikation von IO-Token dienen können, wird also bereits während der Anwendung des trainierten Modells das Modell verbessert und eine verbesserte Grundlage für Lerneffekte (für IO-Tupel) in künftigen Trainingsphasen geschaffen.

Nach Ausführungsformen der Erfindung umfasst das Verfahren eine automatische Kombination von zwei oder mehr I-Tupeln oder von mindestens einem I-Tupel und einem der Inputtoken der Tokenliste zu einem neuen I-Tupel. Das neue I-Tupel wird als ein weiteres der bereits im prädiktiven Modell enthaltenen I-Tupel gespeichert. Die Speicherung erfolgt allerdings nur dann, wenn alle in dem neuen I-Tupel enthaltenen Inputtoken ein Mindestmaß an korreliertem Auftreten in den Input-Datensätzen aufweisen.

Beispielsweise kann eine erste Korrelationsanalyse, die zur initialen Erstellung des Modells durchgeführt wird, zunächst feststellen, dass in den Input-Datensätzen die Wörter "habe" und "gebaut" sehr häufig zusammen auftreten. Es wird ein entsprechendes I-Tupel aus "habe" und "gebaut" erstellt. Nachdem das Modell über einen längeren Zeitraum auf immer weitere Input-Datensätze angewandt wurde, hat sich die Menge der vorhandenen Input-Datensätze erheblich vergrößert. Eine erneute Korrelationsanalyse der Input-Token des mittlerweile erweiterten Input-Datensatzbestandes ergibt, dass die Token "Ich" und das I-Tupel "habe... gebaut" so stark korreliert auftreten, dass ein neues I-Tupel als eine Kombination des "habe...gebaut"-Tupels und des Inputtokens "Ich" erstellt wird.

Nach Ausführungsformen der Erfindung umfasst das Verfahren eine automatische Erzeugung eines neuen IO-Tupels auf Basis eines der (bereits existierenden und gespeicherten)I-Tupel. Das neue IO-Tupel wird dadurch erzeugt, dass die Gesamtheit der Inputtoken dieses neuen IO -Tupels aus den Inputtoken des I-Tupels gebildet wird. Die Outputtoken des neuen IO-Tupels sind Outputtoken, die gemäß der Mengenoperation korreliert auftreten. Das Verfahren umfasst eine Speicherung des neuen IO-Tupels als weiteres IO-Tupel in das prädiktive Modell. Allerdings erfolgt die Speicherung des neuen IO-Tupels nur dann, wenn die Korrelation der Inputtoken und Outputtoken des neuen IO-Tupels hinreichend stark ist.

Nach Ausführungsformen umfasst das Verfahren einen Empfang weiterer einander zugeordneter Paare von Inputdatensätzen und Outputdatensätzen und eine automatische Erzeugung eines neuen IO-Tupels mit einem oder mehreren Inputtoken und/oder I-Tupeln und ein oder mehreren Outputtoken, wenn alle in dem neuen IO-Tupel enthaltenen Inputtoken und Outputtoken ein Mindestmaß an korreliertem Auftreten in den einander zugewiesenen Paaren an Input-Datensätzen und Output-Datensätzen einschließlich der empfangenen weiteren Paaren aufweisen. Das neue IO-Tupel wird als weiteres IO-Tupel in das prädiktive Modell gespeichert.

Diese Schritte können z.B. von einer Vorhersagesoftware verwendet werden, die das trainierte Modell verwendet, um für neue Inputdatensätze neue Outputdatensätze zu erzeugen. Gemäß Ausführungsformen der Erfindung kann die Software, die zur Erzeugung oder Erweiterung des Modells (Lernsoftware) verwendet wird, und die Software, die das trainierte Modell zur Erzeugung von Vorhersagen verwendet, innerhalb des gleichen Softwareprogramms implementiert sein. In anderen Ausführungsformen handelt es sich bei der Lernsoftware und der Vorhersagesoftware um unterschiedliche Softwareprogramme.

Die automatische und/oder manuelle Definition von I-Tupeln kann vorteilhaft sein, da dieser Schritt als Basis für das automatische Erkennen von Korrelationen von I-Tupeln mit ein oder mehreren Output-Token und damit dem automatischen Erkennen und Definieren neuer IO-Tupel verwendet werden kann.

In den IO-Tupeln ist das Wissen über statistische Zusammenhänge zwischen Inputtoken und Outputtoken gespeichert, die zur Lösung des Vorhersageproblems letztlich benötigt werden. Häufig sind jedoch nur nicht-annotierte Trainingsdaten vorhanden, also z.B. natürlichsprachliche Sätze einer Ausgangssprache, für die keine Übersetzung existiert. Dadurch, dass zunächst in automatischer Weise nur I-Tupel als Menge signifikant korrelierende Inputtoken erkannt und erstellt werden, wird zumindest ein Schritt des Lernprozesses auf Daten ausgeführt, die in der Regel in ausreichender Menge zur Verfügung stehen. Bestimmte Korrelationen und Muster, z.B. Redewendungen oder eine sich immer wieder auf gleiche Weise abspielende Kette von einander bedingenden Komponentenausfällen komplexer technischer Systeme (z.B. verteiltes IT-System) können somit automatisch rein durch Analyse von Input-Datensätzen und den darin enthaltenen Input-Token ermittelt werden, auch wenn für die entsprechenden Input-Datensätze keine "Annotationen", also verifiziert korrekte Output-Datensätze (Übersetzungen in die Zielsprache, verifizierte Zustände des Gesamtsystems) für einen gegebenen Input-Datensatz zur Verfügung stehen. Somit kann auch die Datenbasis des Modells vergrößert und damit verbessert werden. Für die Ermittlung der IO-Tupel ist dann ggf. auch ein vergleichsweise kleiner Datensatz aus Input-Datensätzen und zugeordneten Output-Datensätzen ausreichend.

Gemäß Ausführungsformen der Erfindung wird die Berechnung der Korrelation jeglicher Art von Token durch Anwenden von Datenbankoperationen auf der Tokenliste ausgeführt. Beispielsweise können INTERSECT Operationen auf die in der Tokenliste gespeicherten Zeiger zu den Datensätzen, in denen ein Token jeweils auftauchte, durchgeführt werden. Die zurückgegebene Schnittmenge an Interferenzen in Kombination mit der Gesamtzahl an Datensätzen, die ein einzelnes Token beinhalten, erlaubt eine schnelle Berechnung der Stärke der Korrelation von Token (relativ zu einem zufällig erwarteten Zusammenauftreten).

Nach Ausführungsformen der Erfindung erfolgt die Speicherung des neuen IO-Tupels als weiteres IO-Tupel in das prädiktive Modell nur dann, wenn die relativen Positionen der Inputtoken und/oder der Outputtoken des neuen IO-Tupels ein Zusatzkriterium bezüglich deren relativer Position dieser Token erfüllen.

Zusätzlich oder alternativ dazu erfolgt die Speicherung eines neuen I-Tupels als weiteres I-Tupel in das prädiktive Modell nur dann, wenn die relativen Positionen der miteinander korrelierenden Inputtoken dieses neuen I-Tupels ein Zusatzkriterium bezüglich deren relativer Position dieser Token erfüllen. Beispielsweise kann ein genereller Grenzwert bestehen, der beinhaltet, dass Token mit einem Abstand (relative Position) von mehr als diesem Grenzwert (z.B. 50 % der Anzahl an Token, die im Mittel in einem Input-Datensatz enthalten sind) nicht mehr als korrelierend angesehen werden, oder bei Überschreiten dieses Abstands eine noch höhere Stärke der Korrelation erforderlich ist, um noch als "korrelierende" Token angesehen und zur Erzeugung eines I-Tupels verwendet zu werden.

Nach Ausführungsformen der Erfindung ist das Zusatzkriterium ein maximal erlaubter Tokenabstand oder ein erlaubter Positionsabstandsbereich. Beispielsweise kann eine statistische Analyse der Positionen der Token "habe" und "gebaut" ergeben, dass im Mittel zwei Token zwischen "habe" und "gebaut" auftreten, z.B. in Sätzen wie "ich habe ein Haus gebaut" oder "ich habe ein Hotel gebaut". Um auch Datensätze zu erfassen, die die Token "habe" und "gebaut" mit leicht anderem Abstand beinhalten ("Ich habe heute ein Haus gebaut" oder "ich habe ein großes Haus gebaut") kann der Grenzwert als Bereichsangabe automatisch bestimmt werden, z.B. als der aggregierte (z.B. arithmetisch gemittelte und gerundete) Abstand dieser beiden Token in allen Input-Datensätzen +/- einen Toleranzfaktur, z.B. "1". Das würde bedeuten, dass Sätze wie "Ich habe ein großes Haus gebaut" und auch Sätze wie "ich habe Häuser gebaut" als Input-Datensätze betrachtet würden, in denen das "habe-gebaut" I-Tupel vorkommt, Sätze wie "Ich habe ein Haus gekauft und darin einen Kamin gebaut" jedoch nicht mehr, da die ersten beiden Sätze einen Tokenabstand von 3 bzw. 1 aufweisen und damit innerhalb des zulässigen Tokenabstands von 2+/-1, also 1-3, liegen. In dem letztgenannten Satz ist der Tokenabstand jedoch 7 und überschreitet damit den maximal zulässigen Tokenabstand. Der letztgenannte Satz würde daher nicht als ein Input-Datensatz angesehen werden, der das I-Tupel "habe-gebaut" mit einem maximalen Tokenabstand von 1-3 beinhaltet. Dies ist auch sinnvoll, denn während die Token zwischen dem "habe" und "gebaut" in den beiden erstgenannten Beispielen sich auf das gebaute Objekt (Haus/Hotel) beziehen, repräsentieren die Token zwischen "haben" und "gebaut" im letztgenannten Beispiel einen anderen Sinnzusammenhang.

Nach anderen Ausführungsformen ist das Zusatzkriterium eine maximal erlaubte Variabilität der in den Datensätzen beobachteten Tokenabstände.

Nach wiederum anderen Ausführungsformen ist das Zusatzkriterium eine Bedingung, dass ein oder mehrere der in dem Tupel enthaltenen Token gemäß einer bestimmten Reihenfolge unter Wahrung vorgegebener Tokenpositionsabstände angeordnet sind. Beispielsweise könnte es eine Bedingung sein, dass Input I-Tupel, welche Statusänderungen von Kühlungsaggregaten oder Belüftungsaggregaten beinhalten, welche in zeitlicher Hinsicht vor dem automatischen Hochfahren eines Notkühlaggregats eines kühlungsbedürftigen Warenlagers oder IT-Systems geschehen, als relevant angesehen werden. Wenn sich diese Art von Token in der besagten zeitlichen Sequenz in den bereitgestellten Datensätzen häufen, kann dies zu einem automatischen Erzeugen eines IO-Tupels führen, das 2-3 charakteristische Statusänderungen einzelner Kühlaggregate beinhaltet, da diese Zustände regelmäßig zu einer Situation geführt haben, in welcher das Notkühlsystem automatisch aktiviert wurde. Eine andere Reihung der zeitlichen Ereignisse führt dazu, dass das Kriterium einer bestimmten Tokenanordnung nicht erfüllt ist und entsprechend auch eine solche Tokensequenz auch dann nicht zur automatischen Bildung eines neuen IO-Tupels führt, wenn diese Tokensequenz bzw. Tokenkombination häufig beobachtet wird. Beispielsweise kann die Aktivierung des (leistungsstarken) Notkühlaggregats (nach Ausfall einiger aber nicht aller für den Normalbetrieb vorgesehener Kühlaggregate) dazu führen, dass die noch verbliebenen, funktionierenden Normalbetrieb-Kühlaggregate sich herunterregeln. Diese zeitliche Reihung ist aber in der Regel nicht von Relevanz, da das Verhalten der Kühlaggregate bei Zuschaltung des Notkühlsystems bekannt ist. Interessant für den Betreiber des Kühlsystems sind vielmehr die Faktoren, die überhaupt erst dazu geführt haben, dass das Notkühlsystem anspringen musste und weniger die Konsequenzen, die das Hochfahren des Notkühlsystems seinerseits auf die Einzelkomponenten hat. Die Positionsangaben bezüglich der Token können also in manchen Fällen also als Zeitangabe ausgebildet sein. Beispielsweise können die Datensätze Logdateien sein, die die einzelnen Logeinträge (Token) in strikt chronologischer Weise (und damit an zeitlich sequenziellen Positionen) beinhalten.

Nach weiterhin anderen Ausführungsformen müssen zwei oder mehr der oben genannten Kriterien erfüllt sein, damit das neue IO-Tupel bzw. das neue I-Tupel als Erweiterung des prädiktiven Modells gespeichert wird.

Nach Ausführungsformen sind die IO-Tupel verknüpft mit Boolschen Operatoren gespeichert. Die Boolschen Operatoren spezifizieren, welche der in einem IO-Tupel enthaltenen Inputtoken in einem Eingabedatensatz erhalten sein müssen, damit die Inputtoken dieses IO Tupels als in einem Eingabedatensatz vorkommend angesehen werden und die Outputtoken dieses IO-Tupels zur Erzeugung der Ausgabe verwendet werden.

Nach Ausführungsformen umfasst das Verfahren die Bereitstellen einer GUI, die einem Nutzer die manuelle Modifikation, Löschung und/oder Ergänzung der Tokenliste und/oder der darin enthaltenen Token und Tupel ermöglicht. Beispielsweise kann die GUI es dem Nutzer ermöglichen, sich die bereits manuell vordefinierten oder später automatisch ergänzten I-Tupel und/oder IO-Tupel in Form von Tabellen anzeigen zu lassen. Dem Nutzer wird z.B. angezeigt, welche Token in einem Tupel enthalten sind. Beispielsweise kann zudem die Gesamthäufigkeit einzelner Tupel in der Vielzahl Input-Datensätze und/oder Output-Datensätze, die zur Erstellung des prädiktiven Modells verwendet wurden, anzeigen, sowie die Anzahl an Input-Datensätzen (bei I-Tupeln) oder die Anzahl der einander zugeordneten Input- und Output-Datensätze (bei IO-Tupeln), in denen sämtliche Token des jeweiligen Tupels beobachtet wurden.

Nach Ausführungsverfahren der Erfindung umfasst das Verfahren ferner eine Analyse des empfangenen neuen Input-Datensatzes, ob darin I-Tupel oder einzelne Inputtoken vorkommen, die in dem prädiktiven Modell bereits gespeichert sind, wobei die Analyse mit denjenigen I-Tupeln und Inputtoken beginnt, die am häufigsten innerhalb der Vielzahl an Input-Datensätzen vorkommen. Vorzugsweise werden bei I-Tupeln mit gleicher Häufigkeit diejenigen zuerst in der Analyse berücksichtigt, die eine größte Anzahl an Inputtoken enthalten.

Wenn in dem Input-Datensatz ein existierendes I-Tupel enthalten ist, erfolgt eine Erhöhung eines Häufigkeitszählers dieses I-Tupels und eine Speicherung eines Zeigers zu dem neuen Input-Datensatz verknüpft mit dem I-Tupel. Hierdurch wird das prädiktive Modell während der Benutzung auf neuen Daten kontinuierlich ergänzt und verbessert. Die neu identifizierten I-Tupel mit starker Korrelation können semantisch zusammenhängende Wortgruppen einer natürlichen Sprache (z.B. Redewendungen) und/oder bestimmte syntaktische Muster einer natürlichen Sprache oder gehäuft zusammen auftretende Statusänderungen von Systemkomponenten eines komplexen technischen Systems sein, die mit bestimmten Zuständen des Gesamtsystems korrelieren.

Neue IO-Tupel (z.B. Redewendungen, stark korrelierende und prädiktive Systemkomponentenzustandsänderungen etc.) werden automatisiert erzeugt und gespeichert, wenn eine charakteristische Menge an Inputtoken (I-Tupel) oder eine charakteristische Menge an Inputtoken und Outputtoken mehr als einmal in den jeweils relevanten Datensätzen. Token, die in dem neuen Input-Datensatz enthalten sind, aber nicht in der Tokenliste enthalten sind, werden der Tokenliste hinzugefügt.

Vorzugsweise werden alle Input-Datensätze, die nach der initialen Erzeugung des prädiktiven Modells als Input für das Modell verwendet werden, zusammen mit den existierenden Input-Datensätzen in einer Datenbank gespeichert. Vorzugsweise hat der Nutzer die Möglichkeit, über eine GUI einen Output-Datensatz zu ergänzen und zu speichern und/oder auch die Tokenliste und/oder die IO-Tupel mit neuen Output-token zu ergänzen. Beispielsweise kann das prädiktive Modell ein Übersetzungsprogramm Deutsch-Englisch sein. Ein Nutzer erzeugt in einem ersten Schritt das prädiktive Modell durch Verarbeitung von deutschen Sätzen (Input-Datensätze) und deren englischsprachigen Übersetzungen (Output-Datensätze). Ein danach zur Übersetzung eingegebener neuer Input-Datensatz enthält eine Menge deutscher Wörter, von denen eines dem Modell nicht bekannt ist und das dazu korrespondierend auch nicht in der Tokenliste enthalten ist. Das Programm gibt eine Fehlermeldung aus und fordert den Nutzer über eine GUI auf, dieses Inputtoken (unbekanntes Wort) manuell zu übersetzen, indem das diesem Input-Token zugeordnete Outputtoken (übersetztes englisches Wort) manuell eingegeben wird. Somit lernt das prädiktive Modell kontinuierlich während seiner Benutzung neue Vokabeln und Übersetzungen bzw. bei anderen Anwendungsformen sonstige statistisch relevante Korrelationsbeziehungen.

Die I-Tupel (und auch die IO-Tupel) werden als Tokenmengen besonders hoher Korrelation automatisch erkannt und dienen zur automatischen Erweiterung des prädiktiven Modells ("Maschinelles Lernen").

Dass das Modell auf der Zuordnung von Inputtoken und Outputtoken (IO-Tupel) und optional auch auf der Zuordnung von I-Token basiert kann den Vorteil haben, dass der Inhalt des prädiktiven Modells für Menschen nachvollziehbar ist, denn die Vorhersagen des Modells, also die Erzeugung von Output-Datensätzen mit Output-Token in Antwort auf die Eingabe eines Input-Datensatzes mit Inputtoken, beruht auf den in den IO-Tupeln gespeicherten Tokenverknüpfungen. Diese Verknüpfungen (Zeiger) können zumindest in Teilen manuell erstellt sein, aber dann im Laufe des Trainings und auch kontinuierlich während der laufenden Nutzung des Modells erweitert werden.

Wenn in dem Input-Datensatz ein in der Tokenliste bereits existierendes Inputtoken enthalten ist, erfolgt eine Aktualisierung des Eintrags dieses Inputtokens in der Tokenliste und eine Ergänzung dieses Eintrags um einen Zeiger zu dem neuen Input-Datensatz.

Danach erfolgt eine Ergänzung der Tokenliste um alle Inputtoken des neuen Input-Datensatzes, die nicht bereits in der Tokenliste erhalten waren. Die neu gefundenen Token werden also in die Tokenliste aufgenommen und das prädiktive Modell, das die Tokenliste vorzugsweise beinhaltet, hierdurch um neue "Wörter" oder "elementare Elemente" ergänzt. Die Token können z.B. Wörter einer natürlichen Sprache sein oder Zustände oder Zustandsänderungen von Systemkomponenten eines komplexen technischen Systems, insbesondere IT-Systems.

Nach Ausführungsformen der Erfindung umfasst das Verfahren ferner eine Erzeugung eines ersten prädiktiven Modells durch maschinelles Lernen auf ersten Input-Datensätzen und ersten Output-Datensätzen gemäß einer der hier beschriebenen Ausführungsformen des Lernverfahrens. Außerdem wird ein zweites prädiktives Modells durch maschinelles Lernen auf zweiten Input-Datensätzen und zweiten Output-Datensätzen gemäß einer der hier beschriebenen Ausführungsformen des Lernverfahrens erzeugt. Die ersten Input- und Output-Datensätze sind zumindest teilweise verschieden zu den zweiten Input- und Output-Datensätzen. Dies bedeutet, dass die beiden Modelle auf einer ganz oder teilweise unterschiedlichen Datenbasis erzeugt wurden und entsprechend auch bei einer gegebenen Eingabe unterschiedliche Ergebnisse liefern können.

Es wird ein fusioniertes prädiktiven Modell als eine Kombination des ersten und zweiten prädiktiven Modells erzeugt. Die Erzeugung des fusionierten prädiktiven Modells umfasst:
- Erzeugen einer fusionierten, nicht-redundanten Tokenliste als einer Kombination der Tokenlisten des ersten und zweiten Modells;
- Anwenden von Datenbank-internen Mengenoperationen durch die Datenbank auf die Zeiger in der fusionierten Tokenliste, um IO-Tupel zu identifizieren, die mindestens ein Inputtoken und mindestens ein Outputtoken beinhalten, wobei alle Token der IO-Tupel in den einander zugeordneten Input-Datensätzen und Output-Datensätzen korreliert auftreten; und
- Speichern der identifizierten IO-Tupel als Bestandteil des fusionierten prädiktiven Modells. Beispielsweise wird die Tokenliste um das IO-Tupel ergänzt. Zusätzlich können z.B. für jedes Paar aus dem neuen IO-Tupel und aus einem Token oder einem Tokentupel die bereits in der Tokenliste vorhanden waren die Anzahl der Datensätze ermittelt werden, in welchen diese gemeinsam vorkommen. Diese Anzahl kann z.B. als Metadaten verknüpft mit diesem Paar im Modell gespeichert werden. Dies entspräche - graphisch veranschaulicht in Form einer N-dimensionalen Matrixstruktur - der Speicherung der Anzahl der Datensätze, in welchen die Elemente der beiden Dimensionen gemeinsam vorkommen, als Metadaten an der räumlichen "Schnittstelle" der beiden Dimensionen.

Gemäß mancher Ausführungsformen ist es möglich, das erste und zweite Modell auf identischen Datensätzen zu trainieren, sodass die Modelle zunächst identisch sind und insbesondere identische Tokenlisten mit den gleichen Token und erlernten IO-Tupeln beinhalten. Die beiden Modelle werden dann allerdings auf unterschiedliche, neue Input-Datensätze und/oder neue Paare von Input- und Output-Datensätzen angewandt, wobei die Tokenliste jeweils erweitert werden um neue in den neuen Datensätzen enthaltene Token und Tokentupel. Dies führt dazu, dass sich die beiden Modelle mit der Zeit immer stärker voneinander unterscheiden. Da die Modelle jedoch einen gemeinsamen Satz an Inputtoken haben, ist es hier ausreichend, nur noch die modell-individuell hinzugekommenen Inputtoken, Outputtoken, IO-Tupel, I-Tupel und/oder O-Tupel in dem Merging- bzw. Fusionsprozess zu übertragen, um eine erweiterte Tokenliste zu erzeugen. Somit können in dieser Konstellation Gemeinsamkeiten der beiden Modelle belassen und lediglich die Unterschiede (jeweils neu hinzugekommene Input-Token, optional in Kombination mit den jeweils hinzugekommenen Input-Datensätzen) zwischen den Modellen in Kopie ausgetauscht. Dadurch wachsen die Dimensionalitäten der synchronisierten Tokenlisten um die Anzahl der vom jeweils anderen Modell neu gelernten Inputtoken.

Gemäß besonders bevorzugter Ausführungsformen beinhalten die Zeiger in der Tokenliste nicht nur einen Identifikator des Datensatzes, in dem das Token vorkommt, sondern auch einen Identifikator der Datenbank und des Datenverarbeitungsgeräts, welches den Datensatz ursprünglich erhoben hat. Dies erlaubt eine geräteübergreifende Integration verteilt und lokal trainierter und verbesserter Modelle auf Basis nicht überlappender wie auch überlappender Trainingsdatensätze, da die Verwendung von Geräte-Identifikatoren sicherstellt, dass jeder Datensatz logisch mit dem erfassenden Gerät verbunden bleibt, ohne dass Datensatz-ID Konflikte auftreten.

Gemäß Ausführungsformen der Erfindung werden die Tokenliste und die während einer Trainingsphase erlernten IO-Tupel als Bestandteil des prädiktiven Modells gespeichert. Vorzugsweise werden während einer Anwendungsphase ("Testphase" bzw. "Vorhersagephase" die neuen Inputdatensätze ebenfalls tokenisiert, die Tokenliste mit den neuen Inputtoken aktualisiert und durch Anwendung der datenbankinternen Mengenoperationen automatisch neue I-Tupel erkannt, die in die Tokenliste gespeichert werden.

Nach Ausführungsformen der Erfindung werden Token dann als korreliert auftretende Token behandelt, wenn eine Koinzidenz dieser Token beobachtet wird, die um ein Mindestmaß höher ist als eine Koinzidenz, die auf Basis der Gesamthäufigkeit der beiden Token in den jeweiligen Datensätzen statistisch nach dem Zufallsprinzip zu erwarten ist. Die Höhe des Mindestmaßes kann je nach Anwendungsszenario unterschiedlich sein. Beispielsweise kann das Mindestmaß es erforderlich machen, dass die Wahrscheinlichkeit, dass die n Token (bei gegebener Tokenhäufigkeit in der Gesamtheit der zur Modellerstellung verwendeten Datensätze) gemeinsam in dem neuen Eingabedatensatz enthaltenen sind, geringer ist als 5 %. Optional kann das Mindestmaß weitere Kriterien beinhalten, z.B. eine Mindestzahl an Datensätzen, in denen das Token-Tupel beobachtet wurde.

Je nach Ausführungsform ist die Korrelation bzw. Koinzidenz ein Indikator für semantische Nähe (z.B. wenn das prädiktive Modell ein Übersetzungsmodell ist) oder eines Kausalzusammenhangs (wenn ein Outputtoken oder der Output-Datensatz das Resultat des Zusammenwirkens von Ereignissen und/oder Objekten, die jeweils als Inputtoken repräsentiert werden).

Die statistische Korrelationsanalysen zeigen gemäß Ausführungsformen Muster von Koinzidenzen innerhalb von beobachteten Entitäten, z.B. einer Sprache und deren Übersetzung, oder einer Logdatei bezüglich Zustandsänderungen eines technischen Systems und dem Effekt dieses und Systems auf ein anderes, und ermöglichen es, ein prädiktives Modell bezüglich der semantischen Nähe bzw. der Kausalzusammenhänge automatisch zu erstellen auf Basis bereitgestellter Trainingsdaten.

Nach Ausführungsformen der Erfindung sind die Input-Datensätze, die Output-Datensätze und das prädiktive Modell ausgewählt sind aus einer Gruppe umfassend:
- natürlichsprachliche Sätze einer Eingangssprache, natürlichsprachliche Sätze einer Zielsprache, ein Übersetzungsprogramm von der Eingangssprache in die Zielsprache;
- Log-Einträge von Zustandsänderungen erster technischer Systeme, verschiedene operative Zustände eines technischen Gesamtsystems (z.B. verteiltes Computersystem, insb. Cloud-System, Produktionsstraße, chem. Analysesystem), ein Programm zur Vorhersage des operativen Zustands des technischen Gesamtsystems auf Basis der Log-Einträge;

Nach Ausführungsformen umfasst das Verfahren eine Erzeugung einer GUI, die eine graphische Repräsentation eines Netzwerks oder eines Teils eines Netzwerks anzeigt, wobei die Knoten des Netzwerks eine Mischung aus Knoten sind, die Inputtoken, Outputtoken, I-Tupeln und/oder O-Tupeln repräsentieren, wobei die Kanten jeweils zwei Knoten verbinden, deren repräsentierte Inputtoken, Outputtoken, I-Tupel, IO-Tupel und/oder O-Tupel korrelieren. Vorzugsweise ermöglicht es die GUI einem Nutzer, ein Teilnetz des Netzwerks auswählen und vergrößert oder hervorgehoben anzuzeigen.

Beispielsweise kann das Netz oder ein vom Nutzer ausgewähltes Teilnetz in einer 3D Darstellung auf der GUI auf eine Halbkugel projiziert dargestellt werden, wobei der Nutzer durch Auswahl und Ziehen von Knoten und/oder Kanten des Netzwerks innerhalb des Netzwerks navigieren und andere Teile des Netzwerks auszuwählen und/oder hervorgehoben anzuzeigen.

In einem weiteren Aspekt betrifft die Erfindung ein Computerprogramm, das ausgebildet ist zur Durchführung eines Verfahrens nach einer der hier beschriebenen Ausführungsformen. Das Computerprogramm kann z.B. als Computerprogrammprodukt ausgebildet sein.

In einem weiteren Aspekt betrifft die Erfindung ein Computersystem, das operativ an eine Datenbank gekoppelt ist und dazu ausgebildet ist, ein Verfahren gemäß eines der hier beschriebenen Ausführungsformen durchzuführen.

In einem weiteren Aspekt betrifft die Erfindung ein Computersystem, das operativ an eine Datenbank gekoppelt ist und eine Lernsoftware beinhaltet, die dazu ausgebildet ist, ein Verfahren gemäß einer der hier beschriebenen Ausführungsformen durchzuführen, um ein prädiktives Modell automatisch zu erzeugen.

In einem weiteren Aspekt betrifft die Erfindung ein Computersystem, das operativ an eine Datenbank gekoppelt ist, wobei die Datenbank ein prädiktives Modell beinhaltet, das zumindest eine Tokenliste mit Inputtoken, Outputtoken und IO-Tupeln beinhaltet, wobei das Computersystem eine Vorhersagesoftware beinhaltet, die das Modell zur Berechnung einer Vorhersage für einen Inputdatensatz verwendet, wobei der Inputdatensatz Inputtoken der Tokenliste beinhaltet, wobei die Vorhersagesoftware dazu ausgebildet ist, das Modell zu nutzen, um eine Vorhersage in Form eines Outputdatensatz mit Outputtoken zu berechnen, wobei die Vorhersagesoftware dazu ausgebildet ist, die Outputtoken des Outputdatensatzes als diejenigen Outputtoken zu identifizieren, die mit Input-Token des Inputdatensatzes in IO-Tupeln des Modells enthalten sind. Insbesondere kann das Modell ein Modell sein, das gemäß einer Ausführungsform des hier beschriebenen Verrfahrens zur Erzeugung eines prädiktiven Modells erzeugt wurde.

In einem weiteren Aspekt betrifft die Erfindung ein verteiltes System, beinhaltend mehrere Computersysteme nach einer der hier beschriebenen Auführungsformen, wobei die Computersysteme über eine Netzwerkverbindung miteinander verbunden sind.

Unter einem "prädiktiven Modell" wird hier ein Datensatz und/oder ein ausführbares Programm verstanden, welches dazu ausgebildet ist, ein bestimmtes Ergebnis auf Basis von bestimmten Eingabedaten vorherzusagen. Oft liegt das Ereignis, das vorhergesagt werden soll, in der Zukunft, aber ein prädiktives Modell kann auf jede Art von unbekanntem Ereignis angewendet werden, für das es z.B. in einem maschinellen Lernprozess erzeugt wurde unabhängig davon, wann es aufgetreten ist. Das Modell kann einen oder mehrere Klassifikatoren verwenden, um zu versuchen, die Wahrscheinlichkeit zu bestimmen, dass eine Datenmenge zu einer anderen Menge gehört. Ein Modell könnte auch verwendet werden, um zu bestimmen, welches Output-Token bei gegebenem Inputtoken zurückgegeben werden soll.

Unter "Maschinellem Lernen" wird der Prozess der vollautomatischen oder semi-automatischen Generierung von Wissen, das z.B. in Form eines prädiktiven Modells gespeichert sein kann, auf Basis von Trainingsdaten. Im Rahmen eines Lernprozesses wird beim maschinellen Lernen von einem Lernalgorithmus ein statistisches Modell aufgebaut, das auf Trainingsdaten beruht.

Unter "Inputtoken" wird hier ein Token verstanden, das von einem Tokenisierer durch Tokenisierung eines Input-Datensatzes gewonnen wurde.

Unter "Outputtoken" wird hier ein Token verstanden, das von einem Tokenisierer durch Tokenisierung eines Output-Datensatzes gewonnen wurde.

Unter einem "Token" wird hier eine Folge zusammengehöriger Informationseinheiten (z.B. alphanumerische Zeichen oder Bits) verstanden, die von einem Tokenisierer zurückgegeben werden.

Unter "Mengenoperationen" werden hier Operationen, insbesondere Datenbankoperationen, verstanden, die Mengen zu neuen Mengen formen. Beispielsweise gehören folgende Operationen zu den Mengenoperationen: Bildung einer Schnittmenge, Bildung einer Vereinigungsmenge, Bildung einer Differenzmenge.

Unter einem "Inputtoken-Outputtoken-Tupel" bzw. "IO-Tupel" wird hier Eine Menge von Token verstanden, die mindestens ein Inputtoken und mindestens ein Outputtoken beinhalten.

Unter einem "Zeiger" wird hier eine Referenz auf ein Objekt, z.B. einen Datensatz oder auf eine bestimmte Position innerhalb eines bestimmten Datensatzes oder eine Kombination aus dieser Referenz und der Position verstanden. Ein Zeiger kann beispielsweise als Datenbankschlüssel oder Link ausgebildet sein. Vorzugsweise ist der Zeiger ein numerischer Wert. Insbesondere kann der Zeiger ein Datenwert einer bestimmten Bitlänge sein, wobei die Bitlänge vorzugsweise im Hinblick die Hardware und insbesondere die Prozessorarchitektur des Computersystems, auf dem die Datenbank mit dem Datensatz instanziiert ist optimiert ist. Beispielsweise kann die Bitlänge genau so groß sein wie die Größe des Registers der verwendeten Prozessorarchitektur. Das kann den Vorteil haben, dass die Mengenoperationen auf den Zeigern sehr schnell verarbeitet werden können.

Unter einer "Datenbank" wird im Folgenden eine (typischerweise große) Menge von Daten verstanden, die in einem Computersystem von einem Datenbankmanagementsystem (DBMS) nach bestimmten Kriterien verwaltet wird. Die Daten sind dabei in einer Vielzahl von Datensätzen organisiert.

Unter einem "Datenbankmanagementsystem" oder DBMS wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS kann es sich vorzugsweise um ein feldorientiertes DBMS handeln, also um ein DBMS, das dazu konfiguriert ist, Teile einzelner Datensätze, sogenannte Feldwerte, in mehreren unterschiedlichen Feldern zu speichern.

Bei der Datenbank kann es sich z.B. um eine relationale, spaltenorientierte, dokumentenorientierte, graphbasierte, Key-Value-basierte etc. Datenbank handeln. Es kann sich auch um eine multi-Modell-Datenbank handeln, also um eine Datenbank, welche dazu konfiguriert ist, eine Mehrzahl von unterschiedlichen Datenmodellen, z.B. zwei oder mehr der vorgenannten Modelle "relational", "graphbasiert" etc. zu unterstützen. Eine Multi-Modell-Datenbank ist also dazu konfiguriert Daten in mehr als einem Datenmodell zu speichern, optional auch zu indexieren, und abzufragen.

Bei der Datenbank kann es sich um eine "NoSQL" Datenbank handeln. Ein "NoSQL" (englisch für Not only SQL) DBMS ist ein DBMS, welches einem nicht-relationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-DBMSs wie MySQL Cluster, Key-Value-Datenbanken wie Chordless, Google BigTable, GT.M, InterSystems Cache, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB. Gemäß Ausführungsformen werden die Datensätze in der Datenbank als JSON Objekte gespeichert werden.

Unter einem "Datensatz" wird im Folgenden eine dem Datenbanksystem bereitgestellte zusammenhängende Menge von Daten verstanden, welche von dem Datenbankmanagementsystem als zusammenhängende Menge von Daten verwaltet wird. Ein Datensatz umfasst beispielsweise eine Menge inhaltlich zusammenhängender Daten. Nach Ausführungsformen werden Datensätze jeweils als zusammenhängende Datenmengen in dem dokumentenorientierten Datenmodell gespeichert. Beispielsweise kann ein einzelner Datensatz ein bestimmtes physisches Objekt, z.B. eine natürliche Person oder eine Vorrichtung, repräsentieren. Bei der Person kann es sich z.B. um einen Angestellten, einen Patienten, einen Kunden, etc. handeln. Bei der Vorrichtung kann es sich beispielsweise um eine Produktionsvorrichtung, eine Computervorrichtung, ein Computer- oder Netzwerkelement oder eine Transportvorrichtung handeln. Der entsprechende Datensatz kann eine vordefinierte Menge von Attributwerten dieser Person oder Vorrichtung beinhalten (z.B. Name oder Pseudonym, Alter, Größe, Gewicht, Geburtsdatum, Ausweisnummern, Sicherheitszertifikate, Authentifizierungscodes, biometrische Daten, Identifikator, Herstellungsdatum, Inbetriebnahmedatum, Konfigurationsdaten, und andere). Ein Datensatz kann aber auch ein einzelner Satz in einer natürlichen Sprache sein, oder eine Logdatei, die Statusmeldungen oder Statusänderungen einer Vielzahl von Komponenten eines technischen Gesamtsystems (z.B. verteiltes IT-System, Produktionsstraße, etc.) enthält. Beispielsweise kann ein Datensatz unstrukturierte oder semistrukturierte Daten enthalten, z.B. Fließtext, Log-Einträge oder dergleichen, die gemäß Ausführungsformen der Erfindung dazu bestimmt sind, von einem Tokenisierer in einzelne Token zerlegt zu werden, wobei die so erhaltenen Token in einer Tokenliste gespeichert werden, der jedes Token nur einmal enthält und Zeiger zu jedem der Datensätze beinhaltet, die dieses Token beinhalten.

Bei einem Paar aus einem "Input-Datensatz" und einem diesen zugeordneten "Output-Datensatz" handelt es sich vorzugsweise um ein Paar von Datensätzen, die so beschaffen sind, dass der Input-Datensatz gemäß einer Transformationsvorschrift in den Output-Datensatz überführbar ist und/oder der Output-Datensatz sich auf Basis der Transformationsvorschrift aus dem Input-Datensatz ableiten lässt. Die Transformationsvorschrift kann z.B. eine Übersetzung von einer natürlichen Ausgangssprache in eine natürliche Zielsprache sein, oder die Ableitung eines Systemzustands aus den Zuständen oder Zustandsänderungen einzelner Systemkomponenten. Werden diese Paare als Trainingsdaten verwendet, wird das zu trainierende prädiktive Modell darauf trainiert, die Transformationsvorschrift in Form statistischer TokenKorrelationen zu lernen. Das trainierte Modell dagegen hat die Transformationsvorschrift bzw. Ableitungsvorschrift anhand der Trainingsdaten erlernt und ist dazu in der Lage, den Output-Datensatz als Ableitung oder Transformationsprodukt eines Input-Datensatzes zu erzeugen.

Unter einer "Tokenliste" wird hier eine listenartige Datenstruktur verstanden, z.B. eine Datenbanktabelle, ein Array oder Vektor, oder eine Kombination von zwei oder mehr der vorgenannten Datenstrukturen. Eine Tokenliste beinhaltet zumindest einige Token, insbesondere Inputtoken und Outputtoken, sie beinhaltet vorzugsweise aber zusätzlich - zumindest nach einer ersten erfolgten Trainingsphase eines prädiktiven Modells, ein oder mehrere Tokentupel. Insbesondere kann die Liste eine nichtredundante Menge an Elementen beinhalten. Jedes Tupel z.B. als ein Konkatenat der dieses Tupel bildenden Token oder als ein Konkatenat von Token-IDs, die insbesondere als numerische Werte ausgebildet sein können, bestehen.

Gemäß Ausführungsformen ordnet die Tokenliste oder eine von dieser Liste abgeleitete Datenstruktur ihren jeweiligen Elementen Metadaten, z.B. Tokenklassen zu, wodurch die entsprechenden Daten mit Meta- bzw. Kontextinformationen verknüpft werden. Diese Meta- bzw. Kontextinformationen können bei einer Suche und/oder bei einem maschinellen Lernprozess auf den Daten der Datenbank verwendet werden. Die Kontextinformationen können z.B. die gesamte Anzahl der Datensätze, die dieses Token beinhalten, umfassen, oder eine Klasse wie "Verb", "Substantiv", "Kühlaggregat", "Netzwerkkarte", "Arbeitsspeicher" etc.

Gemäß einer Ausführungsform kann die Tokenliste in Form einer Tabelle in der 6ten Normalform gespeichert sein.

Gemäß weiterer Ausführungsformen kann die Tokenliste in Form einer mehrdimensionalen Matrix gespeichert sein, die so viele Dimensionen hat wie die Tokenliste Elemente, wobei die Zeiger jedes Tokenlistenelements in Form eines der dieses Element repräsentierende Dimension zugeordneten Arrays an Zeigern gespeichert sind. Beispielsweise kann die Matrix die Tokenliste beinhalten, wobei Metadaten verknüpft mit den Tokenlistenelementen oder verknüpft mit Paaren von Tokenlistenelementen in oder verknüpft mit der Matrix gespeichert sind.

Unter einer "Matrix" wird hier eine Datenstruktur verstanden, die mindestens zwei Dimensionen umfasst, z.B. eine Datenbanktabelle mit mehreren Spalten, oder ein mehrdimensionaler Array oder Vektor. Beispielsweise kann die Matrix N Dimensionen umfassen, wobei jede der N Dimensionen einem Eintrag der Tokenliste nach Durchführung eines Trainingsschrittes und Speicherung der im Training erhaltenen Tokentupel in der Tokenliste entspricht. Jede der N Dimensionen kann in Form eines Arrays oder Vektors ausgebildet sein, wobei jedes Arrayelement bzw. Vektorelement einen Zeiger zu einem dieses Element enthaltenden Datensatz beinhaltet.

Unter einem "Feld" wird im Folgenden ein Bereich auf einem logischen oder physikalischen Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Ein Feld ist also ein Element zur Speicherung eines Feldwertes eines Datensatzes gemäß obiger Definition. Felder eines Datensatzes werden von einem DBMS gemeinsam verwaltet. Ein Feldwert ist ein Datenwert, der Bestandteil eines Datensatzes ist und in einem Feld des Datensatzes gespeichert ist. Ein Feldwert kann aus einem einzigen Token, einer einzigen Zahl, auch einem einzigen Zeiger (sekundärer Schlüssel) oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Ein "Tokenisierer" ist ein Softwareprogramm oder eine Softwarefunktion, das bzw. die Daten, zum Beispiel einen Datensatz, der als Feldwert in einem einzelnen Feld gespeichert sein kann, als Input erhält, die Daten analysiert, z.B. um Delimiter oder andere Zerlegungskriterien und Muster zu erkennen, und der bzw. die die Daten dann in ein oder mehrere Token als Ergebnis der Analyse zerlegt und die Token zurückgibt. Es ist auch möglich, dass nicht alle Daten als Token zurückgegeben werden. Beispielsweise kann ein Volltextindizierer semantisch unbedeutende Stoppwörter erkennen und herausfiltern, sodass diese nicht indiziert werden. Alternativ werden alle Daten als zurückgegeben. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachliche Texte an vordefinierten Trennzeichen, z.B. Leerzeichen, Punkten oder Kommata, aufgeteilt werden, die so generierten Bestandteile (Wörter) werden als Token verwendet. Nach Ausführungsformen werden alle Token für die Indizierung verwendet. Es ist auch möglich, dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt für eine Verarbeitung von Suchanfragen eines Client-Computersystems an ein Server-Computersystem vorzugsweise eine gleichartige Verarbeitung des Suchwerts durch das Client-Computersystem oder das Server-Computersystem um sicherzustellen, dass die Suchwerte der Suchanfragen den in der Tokenliste enthaltenen Token entsprechen.

Ein Klasse definiert beispielsweise eine Kategorie bzw. ein Typ, dem ein Token angehört. Die Klasse ordnet dem Token mithin Meta- bzw. Kontextinformationen, etwa in Form einer Eigenschaft zu. Beispielsweise kann eine Klasse ein bestimmtes Attribut eines physischen Objekts in Form eines Token repräsentieren. Beispielsweise können zu speichernde Datensätzen, die Attribute von Angestellten enthalten, welche Klassen wie "Name", "Pseudonym", "Ausweisnummer"; "Zugriffszertifikat für Raum R", "Zugriffszertifikat für Gerät G", "Zugriffszertifikat für Gebäude GB", "Alter" repräsentieren. Jedes Token kann ein oder mehreren Klassen zugeordnet sein. Ferner können Kombinationen von Token als eigenständige Token wiederum ein oder mehreren weiteren Klassen zugeordnet sein.

Gemäß Ausführungsformen werden alle zum Training verwendeten Input-Datensätze und Output-Datensätze wie auch die später empfangenen neuen Input-Datensätze unter Verwendung eines dokumentorientierten Datenmodells abgespeichert. Die aus den Datensätzen gewonnenen Token werden vom Tokenisierer (der Bestandteil der Datenbank oder eines externen Anwendungsprogramms sein kann) in eine nicht-redundante Liste gespeichert. Dabei werden gemäß mancher Ausführungsformen die Token Tokentypen zugeordnet und in einer Form gespeichert, welche die sechste Normalform erfüllt.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

Gemäß Ausführungsformen der Erfindung unterstützt die Datenbank eine Kombination der verschiedenen Datenbankkonzepten und ist dazu ausgebildet, die Input- und/oder Output-Datensätze als Dokumente bzw. Container zu speichern (document store) und zusätzlich alle in den Datensätzen enthaltenen Token und deren Positionen in Form einer Tokenliste, z.B. eines Schlüssel-Wert-Speichers, in die 6. Normalform zu überführen. Dieser Schlüssel-Wert-Speicher repräsentiert den gesamten Datenumfang in dem Dokumentenspeicher, allerdings in einer Datenstruktur, die schnelle und effiziente Datenbankoperationen auf dieser Struktur ermöglichen, was für die in der Regel unstrukturierten oder weniger strukturierten Originaldaten, in der Regel nicht möglich ist.

Nach Ausführungsformen der Erfindung sind die Zeiger zu den einzelnen Datensätzen und optional auch Tokenpositionen in der Tokenliste so gespeichert, dass das jeweils verwendete DBMS dazu in der Lage ist, INTERSECT und andere Mengenoperationen direkt auf den einzelnen Zeigern auszuführen, sodass als Ergebnis einer Rechenoperation diejenigen Datensätze erhalten werden, die zwei oder mehr Token enthalten, oder die - bei Berücksichtigung der Positionsinformation - die zwei oder Mehr Token an definierten Tokenpositionen enthalten.

Unter einem Computer bzw. Computersystem wird hier ein Gerät verstanden, welches mittels programmierbarer Rechenvorschriften Daten verarbeitet. Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst. Ein Computer bzw. Computersystem kann eine Kommunikationsschnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden. Bei einem Computersystem kann es sich um ein stationäres Computersystem, wie beispielsweise einen Personal Computer (PC) oder einen in einer Client-Server-Umgebung eingebundenen Client bzw. Server handeln. Ferner kann es sich bei einem Computersystem beispielsweise um ein mobiles Telekommunikationsgerät, insbesondere ein Smartphone, einen tragbaren Computer, wie zum Beispiel einen Laptop PC oder Palmtop-PC, ein Tablet PC, einen Personal Digital Assistant oder dergleichen handeln.

Der Fachmann wird verstehen, dass Aspekte der vorliegenden Erfindung als Gerät, Verfahren oder Computerprogramm oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogrammprodukts annehmen, welches durch ein computerlesbares Medium oder durch mehrere computerlesbare Medien in Form von computerausführbarem Code getragen wird. Ein Computerprogramm umfasst ebenfalls den computerausführbarem Code. "Computerausführbarem Code" kann auch als "Computerprogrammanweisungen" bezeichnet werden.

Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann.

"Computer-Speicher" oder "Speicher" ist ein Beispiel für ein computerlesbares Speichermedium. Ein Computer-Speicher ist jeder Speicher, der einem Prozessor direkt zugänglich ist.

"Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Die Computerprogrammanweisungen können auf einem Prozessor oder auf mehreren Prozessoren ausgeführt werden. Im Falle mehrerer Prozessoren können diese auf mehre unterschiedliche Entitäten (z.B. Clients, Servern) verteilt sein. Jeder Prozessor könnte einen für die jeweilige Entität vorgesehenen Teil der Instruktionen ausführen. Wenn also von einem System oder Verfahren die Rede ist, das mehrere Entitäten umfasst, so verstehen sich die Computerprogrammanweisungen so, dass diese so angepasst sind, um durch einen der jeweiligen Entität zugeordneten oder zugehörigen Prozessor ausgeführt zu werden.

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungs-vorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

In einem weiteren Aspekt betrifft die Erfindung ein Verfahren bzw. System gemäß der nachfolgenden Klauseln:
1. Ein computer-implementiertes Verfahren zur Erzeugung eines prädiktiven Modells durch maschinelles Lernen, umfassend:
   - Bereitstellung (1302) einer Vielzahl von Input-Datensätzen und Output-Datensätzen, wobei jeder der Output-Datensätze einem der Input-Datensätze zugeordnet ist;
   - Tokenisierung (1304) der Input-Datensätze, um für jeden der Input-Datensätze eine Liste an Inputtoken samt deren Position innerhalb ihres jeweiligen Input-Datensatzes zu erhalten;
   - Tokenisierung (1306) der Output-Datensätze, um für jeden der Output-Datensätze eine Liste an Outputtoken samt deren Position innerhalb ihres jeweiligen Output-Datensatzes zu erhalten;
   - Speicherung (1308) aller Inputtoken und aller Outputtoken in Form einer nicht-redundanten Tokenliste (262, 934, 400, 700) in einer Datenbank, wobei Elemente dieser Tokenliste jeweils einen der Inputtoken oder einen der Outputtoken repräsentieren, und wobei die Elemente jeweils Zeiger auf alle Datensätze, die das von diesem Element repräsentierte Token enthalten, sowie die Position dieses Tokens innerhalb des jeweiligen Datensatzes, enthalten;
   - Anwenden (1312) von Datenbank-internen Mengenoperationen durch die Datenbank auf zumindest Teile der Einträge der Tokenliste, um Inputtoken-Outputtoken-Tupel - im Folgenden IO-Tupel genannt - zu identifizieren, die jeweils mindestens ein Inputtoken und mindestens ein Outputtoken beinhalten, wobei alle Token der Inputtoken-Outputtoken-Tupel in den einander zugeordneten Input-Datensätzen und Output-Datensätzen korreliert auftreten; und
   - Speichern (1314) der identifizierten IO-Tupel als Bestandteil eines prädiktiven Modells, wobei das prädiktive Modell dazu ausgebildet ist, in Antwort auf eine Eingabe eines neuen Input-Datensatzes mit zumindest einem Inputtoken einen neuen Output-Datensatz zurückzugeben, wobei der zurückgegebene Output-Datensatz zumindest ein Outputtoken enthält, welches dasjenige der bereits der Tokenliste gespeicherten Outputtoken ist, das gemäß den IO-Tupeln mit dem zumindest einen Inputtoken am stärksten korreliert auftritt.
2. Das computer-implementierte Verfahren nach Klausel 1, wobei die identifizierten IO-Tupel und optional weitere durch die Mengenoperationen identifizierte Token-Tupel in der Tokenliste gespeichert werden, wobei die Tokenliste Bestandteil des prädiktiven Modells ist.
3. Das computer-implementierte Verfahren nach einer der vorigen Klauseln, wobei die Zeiger, die mit jedem Element der Tokenliste verknüpft gespeichert sind, je innerhalb eines Arrays von Zeigern vorgegebener Länge gespeichert sind.
4. Das computer-implementierte Verfahren nach einer der vorigen Klauseln, wobei die Vielzahl von Input-Datensätzen und Output-Datensätzen bei ihrer Bereitstellung verteilt in verschiedenen Datenbanken gespeichert sind, wobei zumindest zwei der Datenbanken auf verschiedenen Datenverarbeitungsgeräten instanziiert sind, die über ein Netzwerk miteinander verbunden sind, wobei die Zeiger in der Tokenliste jeweils eine Adresse bezeichnen, die neben dem Datensatz auch die Datenbank und das Computersystem identifiziert, welche den Datensatz beinhalten.
5. Das computer-implementierte Verfahren nach einer der vorigen Klauseln, wobei die Zeiger in der Tokenliste jeweils eine Adresse einer vordefinierten Bitlänge bezeichnen, wobei:
   - eine erste Reihe ein oder mehrerer Bitpositionen der Bitlänge eine Hardwareadresse eines Datenverarbeitungsgeräts identifiziert, welches den Datensatz erfasst hat und/oder aktuell bereitstellt; und
   - eine zweite Reihe ein oder mehrerer Bitpositionen der Bitlänge die Datenbank identifiziert, welches den Datensatz beinhaltet; und
   - eine dritte Reihe ein oder mehrerer Bitpositionen der Bitlänge den Datensatz innerhalb der Datenbank identifiziert.
6. Das computer-implementiertes Verfahren nach Klausel 5, ferner umfassend:
   - automatische Identifikation der Registergröße der Prozessorarchitektur von ein oder mehreren Prozessoren des Computersystems, auf welchem die Datenbank mit der Tokenliste instanziiert ist, wobei die Registergröße insbesondere 32Bit, 64 Bit, 128 Bit, 256 Bit oder 512 Bit ist;
   - Kodieren der Zeiger für die Speicherung in der Tokenliste so, dass die vordefinierte Bitlänge jedes Zeigers der identifizierten Registergröße entspricht.
7. Das computer-implementierte Verfahren nach einer der vorigen Klauseln, ferner umfassend:
   - Empfang des neuen Input-Datensatzes;
   - Tokenisierung des neuen Input-Datensatzes, um weitere Inputtoken samt deren Position innerhalb des neuen Input-Datensatzes zu erhalten;
   - Anwendung des prädiktiven Modells auf die weiteren Inputtoken, um den neuen Output-Datensatz zu erzeugen; und
   - Zurückgabe des neuen Output-Datensatzes.
8. Das computer-implementierte Verfahren nach einem der vorigen Ansprüche, wobei das Verfahren ferner umfasst:
   - Bereitstellen einer GUI, die einem Nutzer die manuelle Modifikation, Löschung und/oder Ergänzung der IO-Tupel ermöglicht.
9. Das computer-implementierte Verfahren nach einer der vorigen Klauseln, wobei jedes der IO-Tupel verknüpft mit ein oder mehreren Zeiger auf alle Input-Datensätze, die die Input-Token enthalten und mit ein oder mehreren Zeigern auf alle Output-Datensätze, die die Output-Token dieses IO-Tupels enthalten, gespeichert wird, wobei jedes der IO-Tupel zudem die Positionen der Inputtoken innerhalb dieser Input-Datensätze und die Positionen der Outputtoken innerhalb dieser Output-Datensätze enthält.
10. Das computer-implementierte Verfahren nach einer der vorigen Klauseln, ferner umfassend:
   - Identifikation eines bereits im prädiktiven Modell enthaltenen IO-Tupels, dessen Inputtoken sämtlich in dem neuen Input-Datensatz enthalten sind, und das mindestens zwei Output-Token enthält;
   - Anwenden von Datenbank-internen arithmetischen Operatoren durch die Datenbank auf die Positionen der zumindest zwei Outputtokens des identifizierten IO-Tupels in mehreren der Output-Datensätze, um eine aggregierte relative Position der zumindest zwei Output-Token dieses IO-Tupels zu bestimmen; und
   - Erzeugung des zurückgegebenen Output-Datensatzes so, dass dieser die zwei oder mehr Outputtoken an einer bestimmten relativen Position zueinander beinhaltet, wobei die bestimmte relative Position die aggregierte relative Position ist oder als Funktion der aggregierten relativen Position berechnet wird.
11. Computerimplementiertes Verfahren nach einer der vorigen Klauseln, wobei das Verfahren ferner umfasst:
   - Anwenden von Datenbank-internen Mengenoperationen durch die Datenbank auf die Zeiger in der Tokenliste, um Inputtoken-Tupel - im Folgenden I-Tupel - zu identifizieren, die aus mindestens zwei Inputtoken bestehen, die in der Vielzahl der Input-Datensätze korreliert auftreten;
   - Speichern der identifizierten I-Tupel als Bestandteil des prädiktiven Modells; und
   - Verwenden zumindest einiger der I-Tupel als Basis bei der Identifikation der IO-Tupel in einem späteren Training des Modells, wobei die in einem I-Tupel enthaltenen Inputtoken zumindest einige oder die Gesamtheit der Inputtoken eines IO-Tupel stellen, und wobei die Outputtoken diejenigen der Outputtoken der Tokenliste sind, die in den einander zugeordneten Input-Datensätzen und Output-Datensätzen korreliert mit den Input-Token des I-Tupels auftreten.
12. Computerimplementiertes Verfahren nach einer der vorigen Klauseln, ferner umfassend:
   - Empfang weiterer einander zugeordneter Paare von Inputdatensätzen und Outputdatensätzen;
   - Automatische Erzeugung eines neuen IO-Tupels mit einem oder mehreren Inputtoken und/oder I-Tupeln und ein oder mehreren Outputtoken, wenn alle in dem neuen IO-Tupel enthaltenen Inputtoken und Outputtoken ein Mindestmaß an korreliertem Auftreten in den einander zugewiesenen Paaren an Input-Datensätzen und Output-Datensätzen einschließlich der empfangenen weiteren Paaren aufweisen; und
   - Speicherung des neuen IO-Tupels als weiteres IO-Tupel in das prädiktive Modell.
13. Computerimplementiertes Verfahren nach einer der vorigen Klauseln, wobei das Verfahren ferner umfasst:
   - Speicherung des IO-Tupels nur dann in das prädiktive Modell, wenn die relativen Positionen der Inputtoken und/oder die relativen Positionen der Outputtoken des neuen IO-Tupels ein Zusatzkriterium bezüglich der relativer Position dieser Token erfüllen; und/oder
   - Speicherung eines I-Tupels nur dann in das prädiktive Modell, wenn die relativen Positionen der miteinander korrelierenden Inputtoken ein Zusatzkriterium bezüglich deren relativer Position dieser Token erfüllen.
14. Computerimplementiertes Verfahren nach Klausel 13,
   - Wobei das Zusatzkriterium ein maximal erlaubter Tokenabstand oder ein erlaubter Positionsabstandsbereich ist; und/oder
   - Wobei das Zusatzkriterium eine maximal erlaubte Variabilität der in den Datensätzen beobachteten Tokenabstände ist; und/oder
   - ein oder mehrere der in dem Tupel enthaltenen Token sind gemäß einer bestimmten Reihenfolge unter Wahrung vorgegebener Tokenpositionsabstände angeordnet.
15. Das computer-implementierte Verfahren nach einer der vorigen Klauseln, wobei das Verfahren ferner umfasst:
   - Bereitstellen einer GUI, die einem Nutzer die manuelle Modifikation, Löschung und/oder Ergänzung der Tokenliste und/oder der IO-Tupel und/oder I-Tupel des Modells ermöglicht.
16. Das computer-implementierte Verfahren nach einer der vorigen Klauseln 7-15, wobei das Verfahren ferner umfasst:
   - Analyse des empfangenen neuen Input-Datensatzes, ob darin I-Tupel oder einzelne Inputtoken vorkommen, die in dem prädiktiven Modell bereits gespeichert sind, wobei die Analyse mit denjenigen I-Tupeln und Inputtoken beginnt, die am häufigsten innerhalb der Vielzahl an Input-Datensätzen vorkommen;
   - wenn in dem empfangenen Input-Datensatz ein existierendes I-Tupel enthalten ist, Erhöhung eines Häufigkeitszählers dieses I-Tupels und Speicherung eines Zeigers zu dem neuen Input-Datensatz verknüpft mit dem I-Tupel;
   - Wenn in dem Input-Datensatz ein in der Tokenliste bereits existierendes Inputtoken enthalten ist, Aktualisierung des Eintrags dieses Inputtokens in der Tokenliste und Ergänzung dieses Eintrags um einen Zeiger zu dem neuen Input-Datensatz;
   - Ergänzung der Tokenliste um alle Inputtoken des neuen Input-Datensatzes, die nicht bereits in der Tokenliste erhalten waren.
17. Das computer-implementierte Verfahren nach einer der vorigen Klauseln, ferner umfassend:
   - Erzeugung eines ersten prädiktiven Modells durch maschinelles Lernen auf ersten Input-Datensätzen und ersten Output-Datensätzen gemäß einem der Klauseln1-16;
   - Erzeugung eines zweiten prädiktiven Modells durch maschinelles Lernen auf zweiten Input-Datensätzen und zweiten Output-Datensätzen gemäß einem der Klauseln1-16, wobei die ersten Input- und Output-Datensätze zumindest teilweise verschieden sind zu den zweiten Input- und Output-Datensätzen;
   - Erzeugung eines fusionierten prädiktiven Modells durch:
      - Erzeugen einer fusionierten, nicht-redundanten Tokenliste als einer Kombination der Tokenliste des ersten und zweiten Modells;
      - Anwenden von Datenbank-internen Mengenoperationen durch die Datenbank auf die Zeiger in der fusionierten Tokenliste , um IO-Tupel zu identifizieren, die mindestens ein Inputtoken und mindestens ein Outputtoken beinhalten, wobei alle Token der IO-Tupel in den einander zugeordneten Input-Datensätzen und Output-Datensätzen korreliert auftreten; und
      - Speichern der identifizierten IO-Tupel als Bestandteil des fusionierten prädiktiven Modells.
18. Das computer-implementierte Verfahren nach einer der vorigen Klauseln, wobei zwei Token korreliert auftreten, wenn eine Koinzidenz die beiden Token beobachtet wird, die um ein Mindestmaß höher ist als eine Koinzidenz, die auf Basis der Gesamthäufigkeit der beiden Token in den jeweiligen Datensätzen statistisch nach dem Zufallsprinzip zu erwarten ist.
19. Das computer-implementierte Verfahren nach einer der vorigen Klauseln, wobei die Input-Datensätze, die Output-Datensätze und das prädiktive Modell ausgewählt sind aus einer Gruppe umfassend:
   - natürlichsprachliche Sätze einer Eingangssprache, natürlichsprachliche Sätze einer Zielsprache, ein Übersetzungsprogramm von der Eingangssprache in die Zielsprache;
   - Log-Einträge von Zustandsänderungen erster technischer Systeme, verschiedene operative Zustände eines technischen Gesamtsystems, ein Programm zur Vorhersage des operativen Zustands des technischen Gesamtsystems auf Basis der Log-Einträge.
20. Das computer-implementierte Verfahren nach einer der vorigen Klauseln, ferner umfassend:
   - Erzeugung einer GUI, die eine graphische Repräsentation eines Netzwerks oder eines Teils eines Netzwerks anzeigt, wobei die Knoten des Netzwerks eine Mischung aus Knoten sind, die Inputtoken, Outputtoken, I-Tupeln und/oder O-Tupeln repräsentieren, wobei die Kanten jeweils zwei Knoten verbinden, deren repräsentierte Inputtoken, Outputtoken, I-Tupel und/oder O-Tupel korrelieren;
   - wobei vorzugsweise die GUI es einem Nutzer ermöglicht, ein Teilnetz des Netzwerks auswählen und vergrößert oder hervorgehoben anzuzeigen.
21. Ein Computerprogramm ausgebildet zur Durchführung eines Verfahrens nach einem der vorigen Ansprüche.
22. Ein Computersystem, das operativ an eine Datenbank gekoppelt ist und eine Lernsoftware beinhaltet, die dazu ausgebildet ist, ein Verfahren gemäß eines der Klauseln1-20 durchzuführen, um ein prädiktives Modell automatisch zu erzeugen.
23. Ein Computersystem, das operativ an eine Datenbank gekoppelt ist, wobei die Datenbank ein prädiktives Modell beinhaltet, das zumindest eine Tokenliste mit Inputtoken, Outputtoken und IO-Tupeln beinhaltet, wobei das Computersystem eine Vorhersagesoftware beinhaltet, die das Modell zur Berechnung einer Vorhersage für einen Inputdatensatz verwendet, wobei der Inputdatensatz Inputtoken der Tokenliste beinhaltet, wobei die Vorhersagesoftware dazu ausgebildet ist, das Modell zu nutzen, um eine Vorhersage in Form eines Outputdatensatz mit Outputtoken zu berechnen, wobei die Vorhersagesoftware dazu ausgebildet ist, die Outputtoken des Outputdatensatzes als diejenigen Outputtoken zu identifizieren, die mit Input-Token des Inputdatensatzes in IO-Tupeln des Modells enthalten sind, wobei das Modell insbesondere in einem Verfahren gemäß eines der Klauseln1-20 erzeugt wurde.
24. Ein verteiltes System, beinhaltend mehrere Computersysteme nach Klausel 22 und/oder 23, wobei die Computersysteme über eine Netzwerkverbindung miteinander verbunden sind.

### Kurze Beschreibung der Zeichnung

Nachfolgend werden Ausführungsformen der Erfindung mit Bezug auf die Zeichnung beschrieben. In der Zeichnung zeigt
- Fig. 1A: die Tokenisierung eines Input-Datensatzes und eines diesem zugeordneten Output-Datensatzes;
- Fig. 1B: eine Reihe von manuell oder automatisch erzeugten IO-Tupeln;
- Fig. 2: ein Blockdiagramm eines Computersystems zum Erzeugen und/oder Verwenden eines prädiktiven Modells;
- Fig. 3: eine Vielzahl von Input-Datensätzen sowie diesen jeweils zugewiesenen Output-Datensätzen unter Berücksichtigung einzelner Tokenpositionen;
- Fig. 4: eine graphische Repräsentation einer Tokenliste, die Inputtoken, Outputtoken, I-Tupel und O-Tupel vereint;
- Fig. 5: einen Prozess der automatischen Identifikation eines I-Tupels korrelierender Inputtoken;
- Fig. 6: einen Prozess der automatischen Identifikation eines IO-Tupels korrelierender und semantisch korrespondierender Input- und Output-Token;
- Fig. 7: eine graphische Repräsentation einer Tokenliste, die Inputtoken, Outputtoken, I-Tupel und O-Tupel vereint, wobei die Token als numerische Werte repräsentiert sind;
- Fig. 8: einen Prozess der automatischen Identifikation eines I-Tupels korrelierender Inputtoken unter Berücksichtigung von Tokenabständen;
- Fig. 9: einen Prozess der automatischen Identifikation eines IO-Tupels korrelierender und semantisch korrespondierender Input- und Output-Token unter Berücksichtigung von Tokenabständen;
- Fig. 10: ein Übersichtsbild der unterschiedlichen Nutzung von I-Tupeln und IO-Tupeln;
- Fig. 11: mehrere Tabellen, die den Prozess der Überführung eines Datensatzes in eine Tabelle in der 6. Normalform, die als Grundlage der Erzeugung einer Tokenliste dienen kann;
- Fig. 12: ein I-Tupel mit Platzhaltern und Boolschen Operatoren;
- Fig. 13: ein Flussdiagramm eines Verfahrens zur automatischen Erzeugung eines Modells;
- Figur 14A: eine graphische Repräsentation des Modells als Netzwerk innerhalb einer Halbkugel in Querschnittdarstellung;
- Figur 14B: eine graphische Repräsentation des Modells als Netzwerk innerhalb einer Halbkugel in Aufsichtdarstellung.

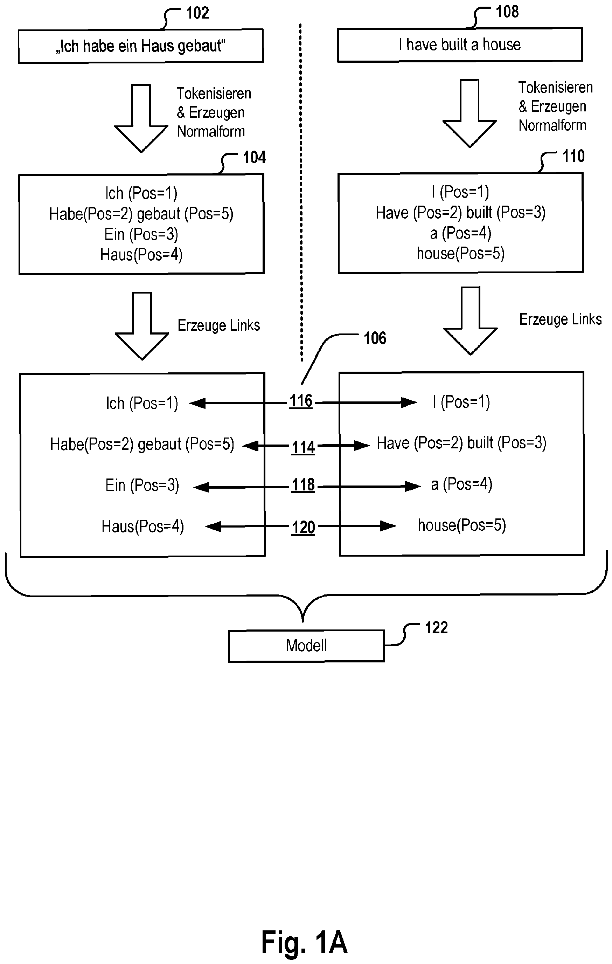

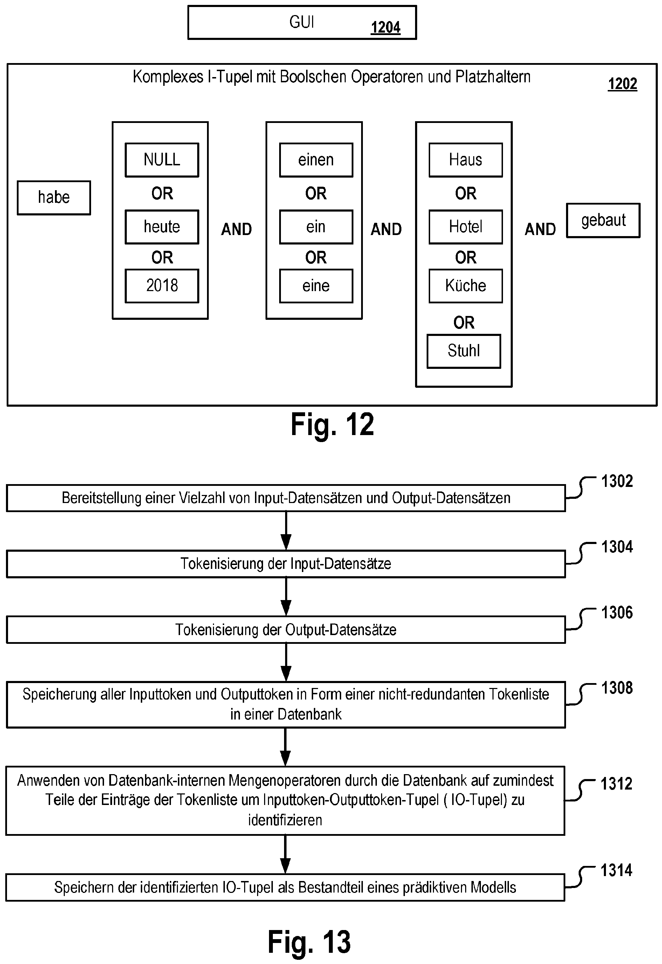

**Figur 1A** zeigt die Tokenisierung eines Input-Datensatzes und eines diesem zugeordneten Output-Datensatzes. Unter Verweis auf das Flussdiagramm von **Figur 13** beschrieben.

Zunächst wird in einem initialen Prozess das Modell auf Basis einer Vielzahl von Input-Datensätzen und Output-Datensätzen, die jeweils einem der Input-Datensätze zugeiwesen sind, automatisch oder semi-automatisch erzeugt. Bei dem Modell soll es sich in dem beschriebenen Beispiel um ein Übersetzungsprogramm von einer Ausgangssprache in eine Zielsprache handeln. Die im Folgenden anhand des Übersetzungsbeispiel geschilderten Prinzipien, Schritte und Module können jedoch in analoger weise auch zur Erzeugung und Anwendung prädiktiver Modelle für andere Problemstellungen verwendet werden.

Zunächst erfolgt in Schritt 1302 eine Bereitstellung einer Vielzahl von Input-Datensätzen und Output-Datensätzen, wobei jeder der Output-Datensätze einem der Input-Datensätze zugeordnet ist.

Bei den Input-Datensätzen handelt es sich zum Beispiel um natürlichsprachliche Sätze in deutscher Sprache. Der Input-Datensatz 102 besteht beispielsweise aus dem Satz "Ich habe ein Haus gebaut". Bei den Output-Datensätzen handelt es sich um natürlichsprachliche, englische Übersetzungen der als Input-Datensätze verwendeten deutschsprachigen Sätze. Der Output-Datensatz 108 besteht beispielsweise aus einer Übersetzung des Input-Datensatzes 102 und besagt: "I have built a house".

Im nächsten Schritt erfolgt eine Tokenisierung 1304 der Input-Datensätze, um für jeden der Input-Datensätze eine Liste 104 an Inputtoken samt deren Position innerhalb ihres jeweiligen Input-Datensatzes zu erhalten.

In analoger Weise wird in Schritt 1306 eine Tokenisierung der Output-Datensätze durchgeführt, um für jeden der Output-Datensätze eine Liste 110 an Outputtoken samt deren Position innerhalb ihres jeweiligen Output-Datensatzes zu erhalten. Der Schritt 1306 kann auch vor oder parallel zu dem Schritt 1304 durchgeführt werden.

In Schritt 1308 werden alle Inputtoken 104 und Outputtoken in Form einer nicht-redundanten Tokenliste in einer Datenbank gespeichert. Diese Liste ist so aufgebaut, dass Elemente dieser Liste jeweils einen der Input- oder Output-Token repräsentieren und dass die Elemente jeweils Zeiger auf alle Input- oder Output- Datensätze, die das von diesem Element repräsentierte Token enthalten, sowie die Position dieses Tokens innerhalb des jeweiligen Datensatzes, enthalten.

In manchen Ausführungsformen sind die Token mit Metadaten, z.B. innerhalb von Zusatzfeldern gespeicherter Marker, verknüpft gespeichert. Die Metadaten zeigen an, ob es sich bei dem Token um ein Inputtoken (z.B. deutsches Wort) oder um ein Outputtoken (z.B. englischsprachiges Wort) handelt.

In Schritt 1312 werden datenbank-interne Mengenoperationen durch die Datenbank auf die Zeiger der Tokenliste angewandt, um IO-Tupel zu identifizieren, die mindestens ein Inputtoken und mindestens ein Outputtoken beinhalten. Die Mengenoperationen sind so spezifiziert, dass die IO-Tupel Inputtoken und Outputtoken miteinander in einem Tupel vereinen, wenn diese in einander zugeordneten Input-Datensätzen und Output-Datensätzen korreliert auftreten. Beispielsweise können hierfür INTERSECT Operationen auf den Zeiger in der "Vorkommensliste" der einzelnen Inputtoken und Outputtoken ausgeführt werden.

Die einander zugeordnete Input-Datensätze und Output-Datensätze haben vorzugsweise einen gemeinsamen Satz-Identifikator oder sonstigen Identifikator, der es ermöglicht, dass die Zeiger in der Vorkommensliste eines Input-Tokens auf einen Input-Datensatz identisch ist zu dem Zeiger in der Vorkommensliste eines Output-Tokens auf einen Output-Datensatz, der diesem Input-Datensatz zugeordnet ist. Andernfalls würde eine INTERSECT Operation nie eine gültige Schnittmenge zurückliefern. Ausführungsformen stellen daher sicher, z.B. durch die Verwendung von gemeinsamen Identifikatoren für einander zugeordnete Input- und Output-Datensätze, die ggf. zusätzlich zu automatisch erzeugten primären Schlüsseln der jeweiligen Input-Datensätze und Output-Datensätzen erzeugt werden, dass die INTERSECT Operationen eine Liste an Zeigers (die z.B. als Satz-IDs fungieren) zurückgeben, in welchen sowohl das Input-Token als auch das Output-Token vorkommen.

In dem hier gezeigten Beispiel könnte z.B. eine Korrelationsanalyse einer Vielzahl von Inputtoken und Outputtoken innerhalb einander zugewiesener Input- und Outpt-Datensätze ergeben, dass das Input-Token "Ich" mit dem Output-Token "I" stärker als mit allen anderen Output-Token in der Tokenliste korreliert und ein IO-Tupel 116 erzeugen. Die Korrelationsanalyse kann z.B. darin bestehen, sämtliche kombinatorisch möglichen Kombinationen von einem Inputtoken und einem Outputtoken zu bilden und einen Korrelationsgrad dieser Zweierkombination durch INTERSECT Operationen zu berechnen. Dann wird für ein gegebenes Inputtoken - z.B. "Ich" - dasjenige Outputtoken ermittelt, das mit diesem am stärksten korreliert, und ein entsprechendes IO-Tupel 116 gebildet. In analoger Weise werden auch weitere IO-Tupel 118, 120 automatisch erkannt und als Ergebnis eines Lernprozesses in das Modell 122 gespeichert. Es ist optional auch möglich, dass zumindest einige der IO-Tupel vorab durch einen Nutzer definiert werden, z.B. um einen gewissen Grundwortschatz samt Übersetzung von Anfang an in das Modell einfließen zu lassen.

Außerdem ist es möglich, dass das Verfahren eine automatische oder von einem Nutzer bewirkte Spezifikation und Speicherung eines I-Tupels beinhaltet. Beispielsweise könnte durch Anwendung von INTERSECT Operationen auf Input-Token automatisch festgestellt werden, dass die Wörter "habe" und "gebaut" stark korrelieren. Infolgedessen wird das I-Tupel "habe-gebaut", das neben den Token auch Positionsinformationen beinhaltet, erzeugt und gespeichert. Alternativ dazu kann auch ein Nutzer ein solches I-Tupel manuell über eine GUI definieren.

Dieses I-Tupel wird im Folgenden so behandelt wie ein Input-Token: es wird eine Koinzidenzanalyse für die Token dieses I-Tupels "habe gebaut" mit allen in der Tokenliste enthaltenen Outputtoken vorgenommen. Die am stärksten korrelierenden Outputtoken, hier die Token "have" und "built" werden mit den Inputtoken des I-tupels zu einem automatisch erkannten IO-Tupel 114 mit je 2 Inputtoken und 2 Outputtoken zusammengefasst.

Vorzugsweise werden sowohl bei der Erzeugung von I-Tupeln als auch bei der Erzeugung der IO-Tupel die Positionen der jeweiligen Tupel mitberücksichtigt. Beispielsweise werden die relativen Positionen (Abstände) aller Inputtoken eines I-Tupels oder IO-Tupels, die innerhalb des gleichen Input-Datensatzes vorkommen, erfasst und aggregiert. Beispielsweise wird ein gerundeter Mittelwert der Abstände gebildet. Dieser kann dazu genutzt werden, einen Maximalabstand oder einen Wertebereich für erlaubte Abstände bestimmter Token dieses Tupels zu definieren. Diese aus den aggregierten relativen Positionsangaben aggregierten Werte können mit dem jeweiligen I-Tupel oder IO-Tupel verknüpft gespeichert werden. Dies kann de Qualität des Modells verbessern. Es ist z.B. möglich, dass zwei bestimmte Input-token zwei unterschiedliche I-Tupel bilden, z.B. dann, wenn diese bezüglich ihrer Abstände zwei Cluster bilden. Das I-Tupel "habe-gebaut" kann zum Beispiel mit einem Abstand von 3 verknüpft gespeichert sein, wobei 3 der gemittelte gerundete Abstand dieser Token in den einschlägigen Input-Datensätzen ist. Es ist auch möglich, dass die über viele Datensätze aggregierten absoluten Tokenpositionen (hier: 2 und 5) gespeichert werden, sodass sich aus diesen dann der Abstand 3 ergibt. Es ist auch möglich, dass ein weiteres i-Tupel gespeichert wird, allerdings mit anderen Abständen. Sollte im Trainingsdatensatz sehr häufig Sätze der Struktur "Ich habe ein Haus gekauft und darin einen Kamin gebaut" vorkommen, könnte das weitere I-Tupel für "habe-gebaut" einen aggregierten relativen Abstand von ca. 7 haben.

In Schritt 1314 speichert die Lernsoftware das oder die identifizierten IO-Tupel als Bestandteil eines prädiktiven Modells, also z.B. in der Tokenliste, die als Bestandteil des prädiktiven Modells verwendet werden kann. Das prädiktive Modell ist dazu ausgebildet, in Antwort auf eine Eingabe eines neuen Input-Datensatzes, der zumindest ein Input-Token enthält, einen neuen Output-Datensatz zurückzugeben, wobei der zurückgegebene Output-Datensatz zumindest ein Outputtoken enthält, welches dasjenige der bereits in der Tokenliste gespeicherten Outputtoken ist, das gemäß den IO-Tupeln mit dem zumindest einen Inputtoken am stärksten korreliert auftritt.

Optional kann das Verfahren auch das automatische Erkennen oder das Empfangen und Speichern manuell definierter O-Tupeln beinhalten, also von Tupeln, die aus korrelierenden Outputtoken bestehen. Die Erkennung erfolgt analog wie für die Inputtoken bzw. I-Tupel beschrieben. Auch die O-Tupel können als Bestandteil des Modells gespeichert werden.

Somit wird auf die gleiche Weise sowohl wichtige syntaktische und/oder semantische Muster der Ausgangssprache, eine Übersetzung bzw. Abbildung einzelner Wörter oder einzelner erkannter Wortgruppen und Wortmuster in Wörter und Wortgruppen der Zielsprache und optional auch semantische oder syntaktische Muster der Zielsprache erkannt und gespeichert. Alle diese an sich unterschiedlichen rechnerischen Problemstellungen können mit den gleichen Datenstrukturen und den gleichen Rechenoperationen durchgeführt werden. Somit wird auf transparente und rechnerisch ressourcenschonende Weise ein starker und vielschichtiger Lerneffekt erzielt.

Im Effekt wird somit die Ausgangssprache gelernt, also wichtige Sprachmuster und Wörter der deutschen Sprache. Eine manuelle Definition einiger I-Tupel zu Beginn des Trainings kann den Vorgang unterstützen. Das Erlernen der Zielsprache einschließlich häufig in dieser verwendeten Wortgruppen (O-Tupel) erfolgt analog. Außerdem wird eine Transformationsfunktion in Form von IO-Tupeln automatisch gelernt. Die Transformationsfunktion ist eine Übersetzungsfunktion vom Deutschen ins Englische. Die Übersetzung besteht aus IO-Token ("Links") Links zwischen ein oder mehreren Token der verschiedenen Sprachen. Auch hier kann es hilfreich sein, einige IO-Token manuell am Anfang des Prozesses vorzugeben, also z.B. "Ich" auf "I" abzubilden und ein entsprechendes IO-Tupel zu definieren und zu speichern.

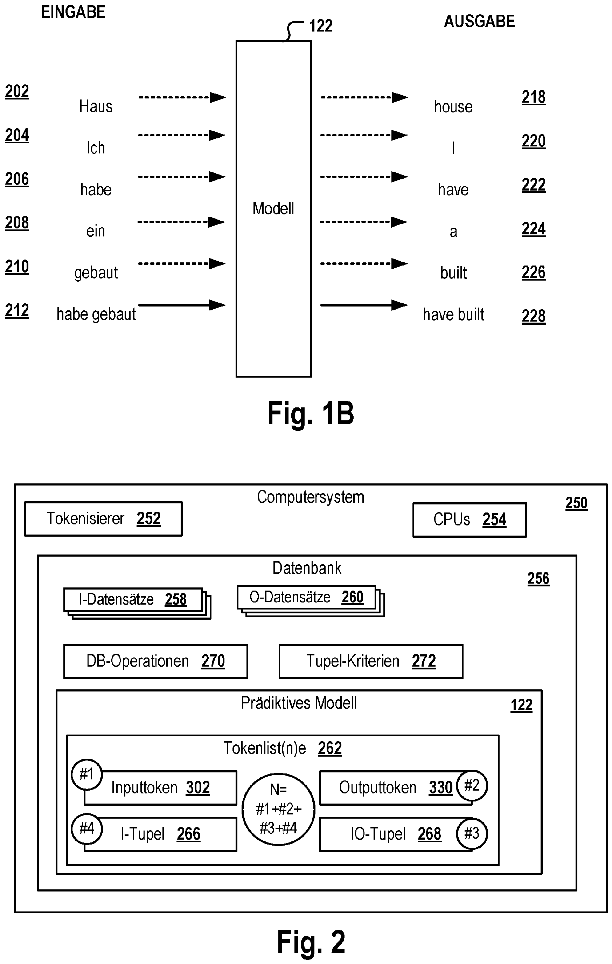

**Figur 1B** zeigt die Zuordnungen von Inputtoken 202-210 und I-Tupeln 212 zu Output-Token 218-226, die das Modell 122 während der Trainingsphase erlernt hat und optional teilweise als vordefinierte Zuordnungen erhalten hat. Die Zuordnungen können als IO-Tupel repräsentiert sein.

Nicht gefundene Übersetzungen oder Bedeutungen können durch manuelle Eingabe eines Nutzers über eine GUI ergänzt bzw. definiert werden. Der Benutzer kann die automatisch erstellten Modelle jederzeit manuell korrigieren, in dem er Linkstrukturen ändert.

**Figur 2** zeigt ein Blockdiagramm eines Computersystems 250 zum Erzeugen und/oder Verwenden eines prädiktiven Modells. Das System beinhaltet ein oder mehrere Prozessoren 254 sowie einen Datenspeicher mit einer Datenbank 256. Das System umfasst zudem eine oder mehrere Tokenisierer 252, die Bestandteil der Datenbank sein können (manche Datenbanken unterstützen z.B. Volltexttokenisierung) oder als datenbankexternes Programm ausgebildet sein können. In der Datenbank sind Trainingsdaten gespeichert, die zur initialen Erzeugung eines prädiktiven Modells 122 mittels eines datenbankbasierten Machine-Learning-Ansatzes verwendet wurden. Die Trainingsdaten umfassen Input-Datensätze 258 und Output-Datensätze 260, wobei jeder der Output-Datensätze einem der Input-Datensätze spezifisch zugeordnet ist. Der oder die Tokenisierer 252 tokenisiert jeden der Input-Datensätze und der Output-Datensätze und speichert diese in eine Tokenliste 262.

In der Datenbank können optional verschiedene Kriterien 272, insbesondere bezüglich der Abstände von Token, definiert sein, die bei der automatischen Erkennung von I-Tupeln 266, IO-Tupeln 268 oder O-Tupeln verwendet werden können.

Im Zuge des Trainings lernt das Modell Korrelationen zwischen Inputtoken und Outputtoken, sowie optional Tokenmuster innerhalb der Input-Datensätze und/oder Output-Datensätze und dadurch in der Lage, neue Input-Datensätze in neue Output-Datensätze zu überführen.

Input- wie Output-Token werden in einer Tokenliste gespeichert. Jedes Token wird in einem eigenen Listenelement der Tokenliste gespeichert. Jedes Listenelement enthält zudem eine Vorkommensliste aus ein oder mehreren Zeigern zu dem Datensatz, von dem das Token stammt. Die Zeiger einer Vorkommensliste können in Form eines Arrays aus einem oder mehreren Feldern fixer Länge gespeichert sein. Vorzugsweise beinhaltet jedes Feld neben dieser Zeiger auch die Position des Tokens innerhalb des durch den Zeiger identifizierten Datensatzes. Die Tokenliste dient als Grundlage für die automatisierten Lernprozesse zur Erzeugung des Modells und beinhaltet die Ergebnisse des Lernprozesses in Form von automatisch ermittelten Token-Tupeln, insbesondere IO-Tupeln und/oder I-Tupeln. Nach Ausführungsformen sind in der Tokenliste auch O-Tupel enthalten.

Nach Ausführungsformen beinhaltet das Modell die Tokenliste und/oder eine modifizierte oder ergänzte Kopie dieser Tokenliste. Das Modell kann z.B. die Metadaten (Tokenklassen, vorberechnete Zählwerte für das Auftreten von Token und Tupeln, Tupel-Templates mit einschränkenden Bedingungen für Tokenabstände für das Identifizieren neuer Tupel etc.) beinhalten.

Das fertige Modell kann nun zur Lösung von Problemen genutzt werden. Wenn ein neuer Input-Datensatz eingegeben wird, wird dieser tokenisiert und sämtliche im Modell bereits enthaltenen I-Tupel (der Länge und Häufigkeit nach absteigend geordnet) gegen die Inputtoken und deren Positionen verglichen, um festzustellen, ob die Input-Token des I-Tupels im neuen Input-Datensatz vorkommen. Die geordnete I-Tupel Liste wird der Reihe nach abgearbeitet bis nur noch I-Tupel mit einzelnen Input-Token übrigbleiben, die nicht gefunden wurden. Die neu gefundenen Token werden als neue Einträge in die Tokenliste aufgenommen. Neue verknüpfte Wortgruppen werden automatisiert erstellt, wenn eine charakteristische Wortgruppe mehrfach vorkommt oder ein noch schärferes Korrelationskriterium erfüllt.

Vorzugsweise werden für alle Token aller erkannten I-Tupel und IO-Tupel statistische Größen wie Gesamthäufigkeit, ein Korrelationsscore, Standardabweichung von Tokenabständen etc. berechnet und verknüpft mit dem I-Tupel oder IO-Tupel in dem Modell gespeichert. Diese statistischen Größen können zur Berechnung der Vorhersage (z.B. Übersetzung, Statusvorhersage für technische Systeme, etc.) verwendet werden.

Ausführungsformen können den Vorteil haben, dass ein datenbankbasiertes, nachvollziehbares und ressourcenschonendes Verfahren zum maschinelle Lernen bereitgestellt wird. Viele bestehende Datenbanksysteme wie z.B. Cortex-DB umfassen alle zum maschinellen Lernen nötigen Operationen wie z.B. Mengenoperationen oder Aggregationsfunktionen. Somit wird ein kontinuierliches Lernen durch das Lernmodul unter Berücksichtigung aller von dem System bzw. dem Lernmodul gesehenen Daten ermöglicht.

Die Datenbank speichert gemäß eines Beispiels alle empfangenen Datensätze in einem dokumentenorientierten Datenmodell. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Das Datenbankmanagementsystem ebenso wie das Lernmodul können jederzeit auf die ursprünglichen Datenbestände zurückgreifen und diese in bei der weiteren Verarbeitung berücksichtigen.

Basierend auf diesem Datenpool an Rohdaten, welchen das dokumentenbasierte Datenmodell bereitstellt, wird eine Tokenliste erzeugt, und durch Anwendung von Datenbankoperationen auf die Adressen der Listeneinträge der Tokenliste wird die Tokenliste um zusätzliche, gelernte Informationen, insbesondere Korrelationsinformationen, die innerhalb der IO-Tupel und optional auch I-Tupel und O-Tupel repräsentiert sind, erweitert. Erst durch die Datenbankoperationen werden aus den Datensätze strukturelle Information bzw. Sinnzusammenhänge extrahiert. Diese strukturellen Informationen bzw. Sinnzusammenhänge können in Form von Zuordnungen (I-Tupel oder IO-Tupel) und optional zudem auch in Form von Klassenzuordnungen der in der Liste gespeicherten Token gespeichert werden.

Hierzu werden die Datensätze durch eine Tokenisierung auf ein elementares Niveau heruntergebrochen, welches die elementaren Bestandteile der Datensätze in Form der Token berücksichtigt. Die Token werden durch das Lernmodul im Hinblick auf deren Korrelation mit anderen Token und/oder Zugehörigkeit zu bereits definierten I-Tupeln und IO-Tupeln untersucht.

Hierdurch werden die Token-Zuordnungen nach bekannten Daten, welche gesicherten Fakten darstellen, und unbekannte Daten differenziert. Ausführungsformen können den Vorteil haben, dass die Verwendung der von einem Lernmodul bestimmten Strukturen und Gesetzmäßigkeiten in den Datensätzen, welche sich in den I-Tupeln und IO-Tupeln niederschlagen, auf den einer Verwendung der vorbestimmten Tupeln beruht. Unbekannt Daten werden demgegenüber als solche erfasst und solange außen vorgelassen werden, bis diese ebenfalls klassifiziert und mithin als gesicherte Fakten angesehen werden können.

Ausführungsformen können den Vorteil haben, dass keine zufällige Initialisierung erforderlich ist, wie etwa bei bekannten selbstlernenden Systemen, z.B. neuronalen Netzwerken. Die Initialisierung kann vielmehr auf einigen vordefinierten I-Tupeln und IO-Tupeln beruhen.

Ausführungsformen der Erfindung können den Vorteil haben, vollständig deterministisch zu sein.

Nach Ausführungsformen implementiert das System einen Algorithmus zum maschinellen Lernen, wobei das Verfahren nicht beschränkt ist auf einen bestimmten Algorithmus. Nach Ausführungsformen umfasst der Algorithmus zum maschinellen Lernen zumindest einen Klassifizierungsalgorithmus zum Klassifizieren von Token. Bei dem maschinellen Lernen kann es sich um ein überwachtes oder ein unüberwachtes Lernen handeln. Das maschinelle Lernen kann eine Klassifizierung und/oder eine Regressionsanalyse umfassen. Ein Lernalgorithmus versucht, eine Hypothese bzw. eine Abbildung zu finden, welche jedem Eingabewert den (vermuteten) Ausgabewert zuordnet. Liegen die zuzuordnenden Ausgabewerte in einer kontinuierlichen Verteilung vor, deren Ergebnisse beliebige quantitative Werte eines vorgegebenen Wertebereiches annehmen kann, wird im Allgemeinen von einem Regressionsproblem gesprochen. Liegen die zuzuordnenden Ausgabewerte hingegen in diskreter Form vor bzw. sind die Werte qualitativ, wird im Allgemeinen von einem Klassifikationsproblem gesprochen. Nach Ausführungsformen stützt sich das maschinelle Lernen auf die Klassifikation der indizierten Token. Gemäß Ausführungsformen der Erfindung umfasst das Lernmodul einen speziell für das maschinelle Lernen entwickelten Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Figur 2 zeigt, dass die Tokenliste 262 Bestandteil des prädiktiven Modells 122 sein kann und eine Mischung verschiedener Elemente enthält. Bereits vor dem ersten Lernschritt sind Inputtoken 302 und Outputtoken 330 in der Liste enthalten. Nach dem Training kommen noch IO-Tupel 268 und vorzugsweise weitere I-Tupel und/oder O-Tupel sowie optional weitere Inputtoken und Outputtoken hinzu. Wenn man die Tokenliste als N-dimensionale Matrix speichert oder veranschaulicht, leitet sich die Zahl N der Dimensionen als Summe der Anzahl #1 der Inputtoken, der Anzahl #2 der Outputtoken, der Anzahl #3 der IO-Tupel, und, sofern vorhanden, der Anzahl #4 weiterer Tupel (z.B. I-Tupel und O-Tupel) ab.

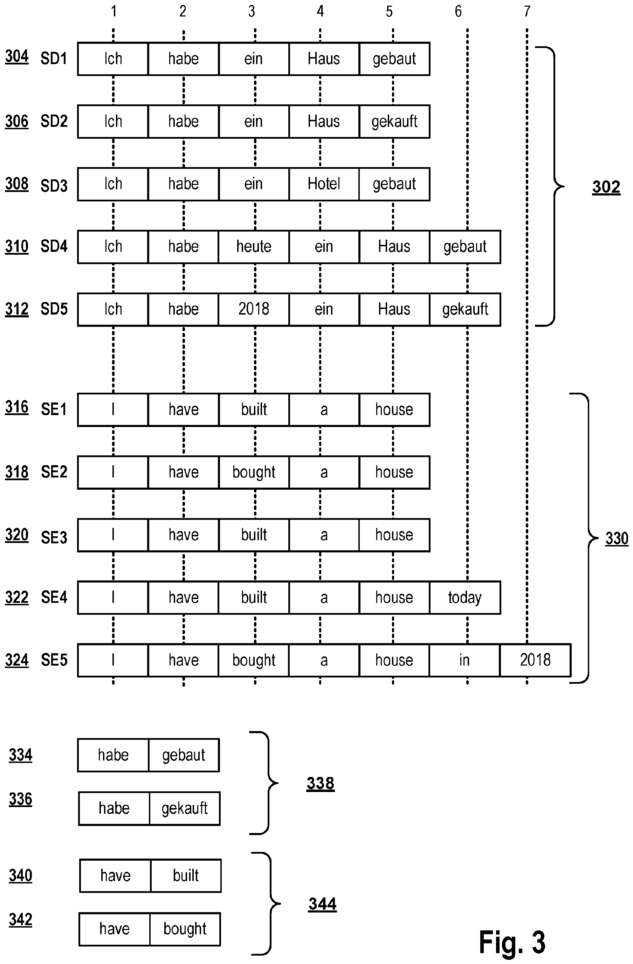

**Figur 3** zeigt eine Vielzahl 302 von Input-Datensätzen 304-312 sowie diesen jeweils zugewiesenen Output-Datensätzen 330, 316-324 unter Berücksichtigung einzelner Tokenpositionen. Die Tokenpositionen innerhalb der Datensätze sind mit vertikalen Linien angedeutet. Unten in der Figur ist eine Menge 338 von I-Tupeln 334, 336 dargestellt, die durch automatisierte, datenbankgestützte Korrelationsanalyse dieser und weiterer Input-Datensätze als besonders häufig zusammen auftretendes Paar von Inputtoken identifiziert wurden. Außerdem ist dort eine Menge 338 von O-Tupeln 338, 340 dargestellt, die durch automatisierte, datenbankgestützte Korrelationsanalyse dieser und weiterer Output-Datensätze als besonders häufig zusammen auftretendes Paar von Outputtoken identifiziert wurden. Auf analoge Weise werden auch IO-Tupel durch eine Korrelationsanalyse von Input- und Outputtoken innerhalb einander zugeordneter Input- und Output-Datensätze ermittelt.

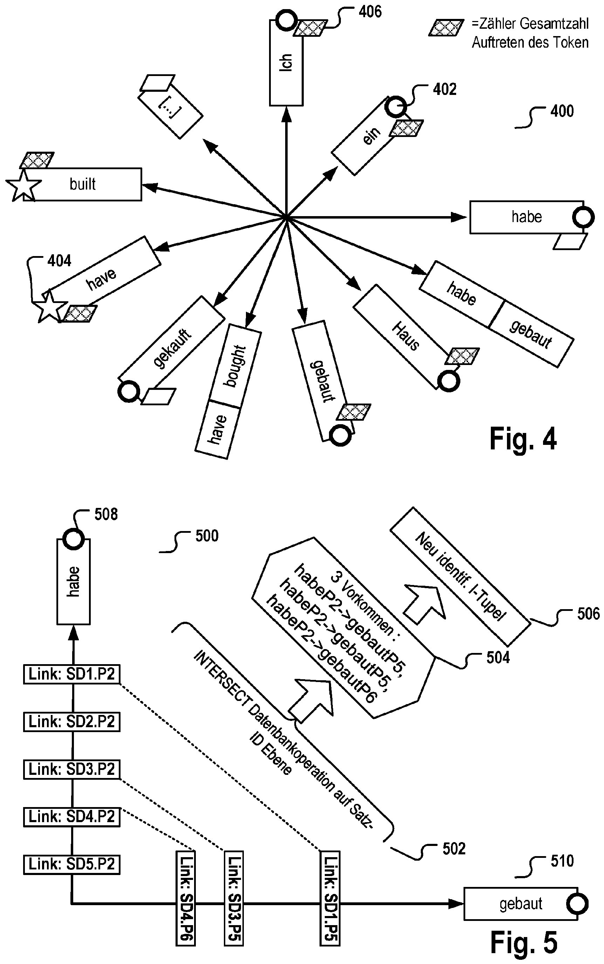

**Figur 4** zeigt eine graphische Repräsentation 400 einer Tokenliste, die Inputtoken, Outputtoken, I-Tupel, O-Tupel und IO-Tupel (letztere nicht graphisch dargestellt) vereint. Die Tokenliste wird hier in Form einer N-dimensionalen Matrix visualisiert, wobei jedes Element der Tokenliste einer Dimension (Achse) der Matrix entspricht.

Jedes Tokenlistenelement (Token wie Tupel) ist mit Metadaten verknüpft gespeichert. Die Metadaten 402-406, hier als Kreise und Sterne repräsentiert, geben z.B. an, ob ein Token ein Inputtoken oder ein Outputtoken ist. Die Metadaten können weitere, vorberechnete Daten enthalten, z.B. eine Gesamtanzahl des Vorkommens des Tokens oder Tupels in der Gesamtheit der Input- oder Output-Datensätze, eine über diese Gesamtheit aggregierte Tokenposition dieses Tokens, etc., beinhalten.

Gemäß einer Ausführungsform ist für jedes Dimensionenpaar (also jegliche mögliche Kombination zweier Inputtoken, Outputtoken, IO-Tupel, I-Tupel oder O-Tupel) ein Zahlenwert (z.B. als Bestandteil der Metadaten) gespeichert, der die Anzahl der Datensätze angibt, in welchen die von den beiden Dimensionen repräsentierten Elemente zusammen auftreten.

**Figur 5** zeigt einen Prozess der automatischen Identifikation eines I-Tupels korrelierender Inputtoken. Gemäß dieser Ausführungsform ist jedes Token in der Tokenliste 400 mit einer Liste an Zeigern auf diejenigen Datensätze (hier: Input-Datensätze) verknüpft gespeichert, in welchen das Inputtoken enthalten ist. Diese Zeiger sind hier als "Links" dargestellt und beziehen sich auf die in Figur 3 dargestellten Sätze. "SD1.P2" bedeutet z.B. "deutschsprachiger Satz 1, Position 2". Somit ist das Token 508 verknüpft mit 5 Zeigern auf 5 verschiedene Input-Datensätze in der Tokenliste gespeichert, Token 510 ist verknüpft mit 3 Zeigern in der Tokenliste gespeichert. Vorzugsweise sind die Zeiger jedoch keine URLs oder ASCI-basierte Zeichenketten, sondern bitweise kodierte Datenwerte fixer Länge.

Die Zeiger sind jeweils so gespeichert, dass sie einer Datenbank-INTERSECT Operation (also der Berechnung einer Schnittmenge zweier Mengen) zugänglich sind. Insbesondere kann das beinhalten, dass jeder Zeiger in einem eigenen Datenbankfeld gespeichert ist. Dadurch, dass eine INTERSECT Operation 502 auf alle Zeiger des Tokens 508 und alle Zeiger des Tokens 510 durchgeführt wird, wird eine Schnittmenge aus drei Zeigern ermittelt (hier mit gestrichelten Linien dargestellt), die auf Input-Datensätze verweisen, die beide Token 508, 510 enthalten. Außerdem führt die Datenbank eine Berechnung durch, ob die Korrelation dieser beiden Token höher ist als dies zufallsbasiert angesichts der jeweiligen Token-Gesamthäufigkeiten zu erwarten wäre. Auch eine zusätzliche Berücksichtigung der Tokenpositionen und ihrer Abstände wird durchgeführt. Beispielsweise werden Koinzidenz-Events, bei welchen die Token in einem zu großen Abstand auftreten, ignoriert. Das Ergebnis der Analyse 504 wird in der Form eines neuen, automatisch identifizierten I-Tupels in Schritt 506 gespeichert.

In einer Ausführungsform werden die Zeiger auf die Ursprungs-Datensätze so spezifiziert, dass diese zusätzlich auch die Position des Tokens beinhalten. Bei dieser Art und Wiese, Zeiger zu spezifizieren, führt die INTERSECT Operation 502 automatisch dazu, dass ausschließlich I-Tupel gebildet werden, die die jeweiligen Token an exakt der gleiche Position innerhalb der jeweiligen Datensätze haben. Dies kann den Rechenaufwand reduzieren, da eine nachgeschaltete Positionsanalyse nicht erforderlich ist. Allerdings führt sie zur Bildung einer großen Zahl an I-Tupeln mit nur kleinen Variationen bezüglich der Position einzelner Token.

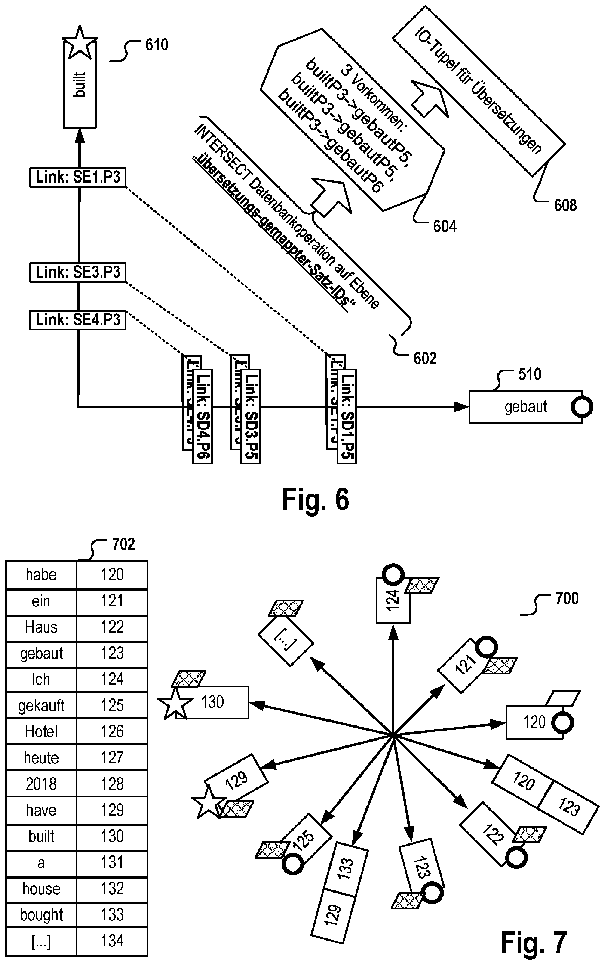

**Figur 6** zeigt einen Prozess der automatischen Identifikation eines IO-Tupels korrelierender und semantisch korrespondierender Input- und Output-Token. Sie Schritte 602, 604, 608 laufen analog zu den für die I-Tupel beschriebenen Schritte 502-508 ab mit dem Unterschied, dass es sich nicht um zwei Input-Token sondern um ein Input- und ein Output-Token handelt. Allerdings muss sichergestellt sein, dass für die INTERSECT Operation die Zeiger auf die Output-Datensätze aus Identifikatoren derjenigen Input-Datensätze sind, denen diese Output-Datensätze zugeordnet sind, damit die INTERSECT Operation funktionieren kann. Die INTERSECT Operation wird hier nur auf der Ebene der Satz-IDs durchgeführt, da sich die absoluten und relativen Positionen der Token der Inputsätze von den Positionen der korrespondierenden Token in den Output-Sätzen unterscheiden kann.

Nach Ausführungsformen der Erfindung macht der Vorgang der automatischen Identifikation von IO-Tupeln keinen Unterschied zwischen einzelnen Inputtoken, Outputtoken, I-Tupeln und IO-Tupeln, da alle diese Token bzw. Tupel als Element der Tokenliste gespeichert werden. Die Art der Speicherung der Token-Tupel und der einzelnen Token in der Tokenliste 700 ist gleich. Jeder neue Token und jeder neue Tupel korrespondieren zu und erzeugen ein neues Element der Tokenliste, wie sie z.B. in Figur 7 dargestellt ist.

**Figur 7** zeigt eine graphische Repräsentation einer Tokenliste 700, die Inputtoken, Outputtoken, I-Tupel und O-Tupel vereint, wobei die Token als numerische Werte repräsentiert sind. Die Tokenliste 700 korrespondiert zu dem in Figur 4 gezeigten Tokenliste 400, mit dem Unterschied, dass die Tokenwerte durch numerische Werte ersetzt werden.

Die numerischen Werte können z.B. primäre Datenbankschlüssel sein, die zusammen mit den jeweiligen "Original"-Token in einer separaten Tabelle 702 gespeichert sind.

Dies kann die Ladezeit der Tokenliste in den Arbeitsspeicher reduzieren, da diese keine Tokenstrings beinhalten, die in der Regel einen höheren Speicherbedarf haben.

Gemäß bevorzugten Ausführungsformen werden Metadaten wie z.B. die Klassenzugehörigkeit und/oder Häufigkeit von Token und Token-Tupeln nicht auf einem nichtflüchtigen Speichermedium gespeichert, sondern lediglich temporär berechnet und im Arbeitsspeicher abgelegt.

Wenn Metadaten abgespeichert werden, so werden sie vorzugsweise so gespeichert, dass das Token bzw. die I-Tupel, IO-Tupel oder O-Tupel, auf die sich die Metadaten beziehen, auf ihre jeweiligen Metadaten verweisen. Die Metadaten werden vorzugsweise als Bestandteil des prädiktiven Modells aber außerhalb der Tokenliste gespeichert, auf welche die Datenbankoperationen angewandt werden, sodass die Menge der Daten, die bei der Erzeugung, Aktualisierung oder Verwendung der Tokenliste in den Arbeitsspeicher geladen werden muss, reduziert wird. Die Verwendung numerischer Zahlen als Repräsentanzen für Token und Tokentupel und/oder die Speicherung der Metadaten außerhalb der Tokenliste kann den Vorteil haben, dass die Größe der Tokenliste auch bei einem sehr umfangreichen Datensatz an Token noch problemlos und schnell komplett auch in vergleichsweise kleine Arbeitsspeicher geladen werden können, sodass die Berechnung des Modells auf sehr effiziente Weise ohne Swapping-Effekte durchgeführt werden kann.

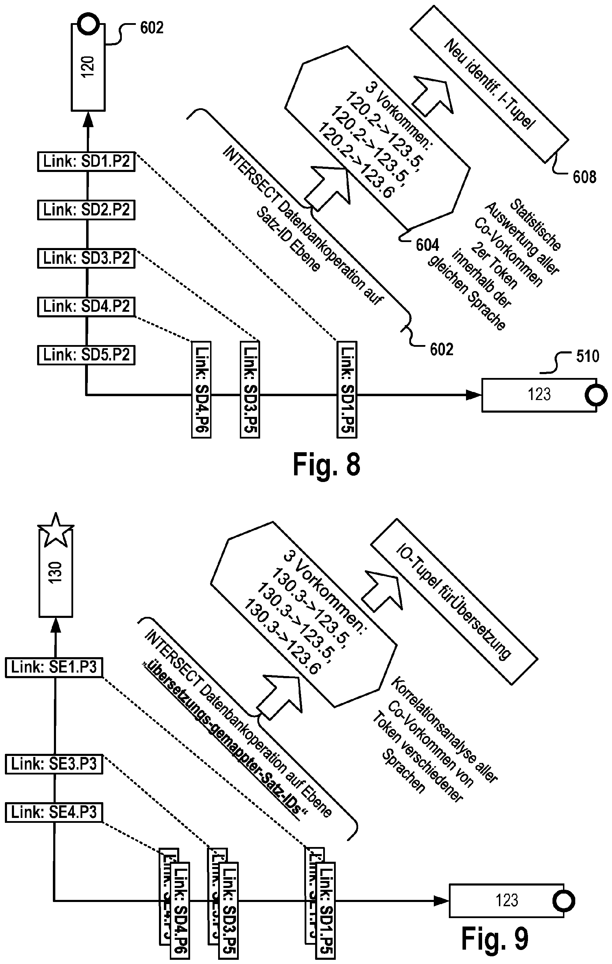

**Figur 8** zeigt einen Prozess der automatischen Identifikation eines I-Tupels korrelierender Inputtoken unter Berücksichtigung von Tokenabständen. Der Prozess entspricht dem in Figur 5 dargestellten Prozess, wobei in der Tokenliste allerdings numerische Werte anstatt der Token enthalten sind. Die numerischen Werte sind Zeiger (z.B. Datenbankschlüssel, die auf eine separate Tabelle, die die jeweiligen Token enthält, wie für Figur 7 beschrieben).

**Figur 9** zeigt einen Prozess der automatischen Identifikation eines IO-Tupels korrelierender und semantisch korrespondierender Input- und Output-Token. Der Prozess entspricht dem in Figur 6 dargestellten Prozess, wobei in der Tokenliste allerdings numerische Werte anstatt der Inputtoken enthalten sind. Die numerischen Werte sind Zeiger (z.B. Datenbankschlüssel) auf eine separate Tabelle, die die jeweiligen Token enthält, wie für Figur 7 beschrieben.

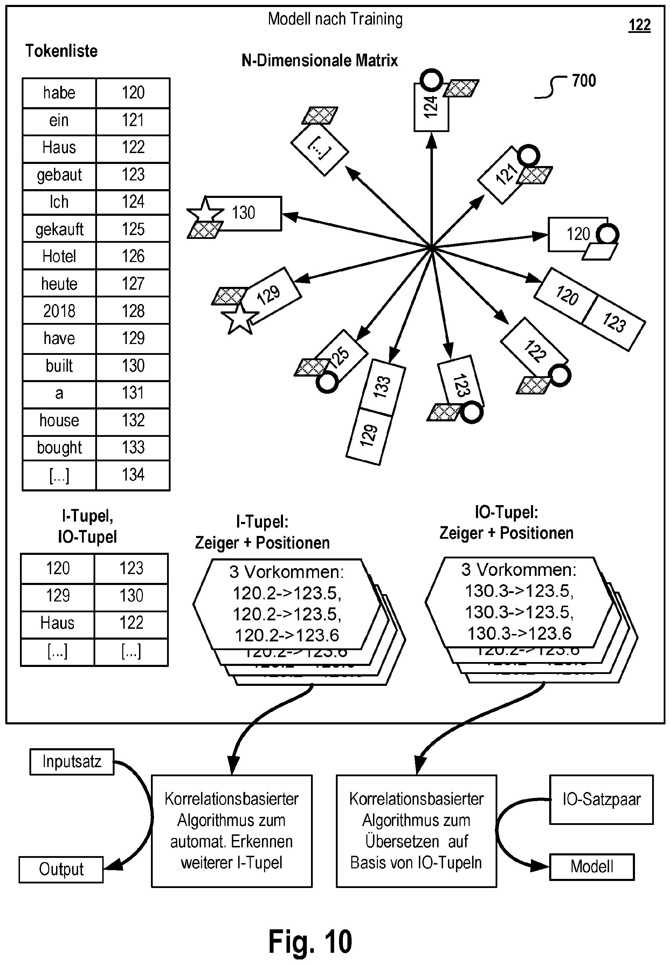

**Figur 10** zeigt ein Übersichtsbild der unterschiedlichen Nutzung von I-Tupeln und IO-Tupeln. Während die I-Tupel Muster innerhalb der Input-Datensätze repräsentieren, z.B. bei dem Übersetzungsbeispiel Redewendungen und feststehende Ausdrücke, repräsentieren die IO-Tupel vorgegebene und/oder automatisch erlernte Übersetzungen von ein oder mehreren Input-Token in bestimmte Output-Token. Während die I-Token dazu dienen, als Basis für die automatische Erkennung neuer, größerer I-Tupel und/oder als Basis für die automatische Erkennung neuer, komplexer IO-Tupel mit mehreren Inputtoken zu dienen, dienen die IO-Tupel dem Zweck, eine Übersetzung für einen neuen Eingabesatz ausgeben zu können. Somit können mit den gleichen Datenstrukturen und den gleichen Datenbankoperationen mehrere unterschiedliche Lerneffekte erzielt werden, die letztlich alle dazu beitragen, dass weitgehend automatisch ein Modell erzeugt wird, welches eine akkurate Übersetzung zurückgeben kann.

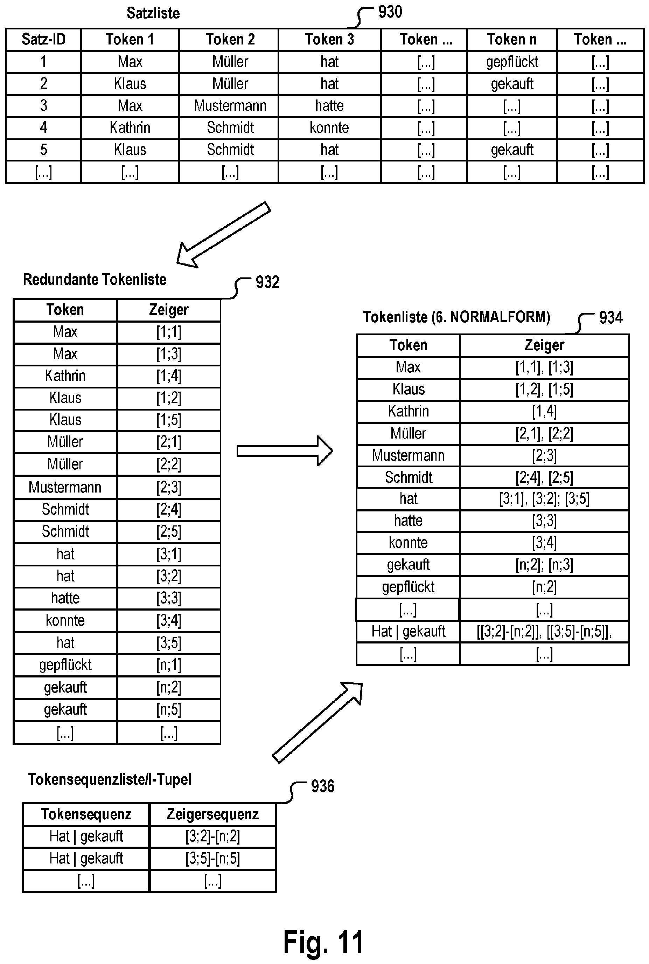

**Figur 11** zeigt mehrere Tabellen, die den Prozess der Überführung eines Datensatzes in eine Tabelle in der 6. Normalform. Eine Tabelle ist in der 6. Normalform (6NF), wenn die Zeile den Primärschlüssel und höchstens ein weiteres Attribut enthält"). In Tabellen in der 6. Normalform gemäß bevorzugten Ausführungsformen der Erfindung haben die Einträge jeweils noch einen Zeitstempel. Die Zeitstempel beschreiben die Entwicklung eines Datenfeldes mit der Zeit (Sie speichern diese Information insb. gemäß dem "Append only" Prinzip).

Gemäß Ausführungsformen dienen eine oder mehrere Tabellen der 6. Normalform als die Tokenliste, auf welcher die Mengenoperationen ausgeführt werden. Beispielsweise könnten die durch den Tokenisierer erzeugten Token zunächst temporär ein einer Tabelle 930 gespeichert werden, welch die Token eines Datensatzes innerhalb einer Zeile verknüpft mit einem Identifikator des jeweiligen Datensatzes speichert. Beispielsweise kann jede Spalte dieser Tabelle eine Position repräsentieren. Diese Ausgangstabelle kann sodann in eine redundante Tokenliste überführt werden, die einen Zeiger auf den ursprünglichen Datensatz und die Position des Tokens enthält. Im nächsten Schritt wird diese redundante Liste in eine Liste der 5. Normalform, also eine nicht redundante Liste, überführt, in welcher jedes Token nur einmal vorkommt und jeweils mit einem oder mehreren Zeigern verknüpft gespeichert ist, die jeweils den Ort des Auftretens (Datensatz und vorzugsweise auch Datenbank sowie Computersystem) und vorzugweise auch die Position des Tokens innerhalb dieses Datensatzes angeben oder mit der Position verknüpft gespeichert sind. In einem weiteren Schritt wird die Tabelle 932 in die 6. Normalform überführt, die als die Tokenliste verwendet werden kann. Die Tokenliste beinhaltet vorzugsweise zusätzlich Zeitstempel, die für jeden der in der Liste enthaltenen Token die Zeit der erstmaligen Entdeckung in einem Datensatz und der Hinzufügung zu der Tokenliste angibt. Die Zeitstempel beschreiben die Entwicklung eines Datenfeldes mit der Zeit (append Operationen). Die Zeitstempel werden hier aus Platzgründen nicht angezeigt. Die Tabelle 934 kann z.B. als Tokenliste verwendet werden, die sowohl Inputtoken als auch Outputtoken in nicht-redundanter Form beinhaltet.

Gemäß Ausführungsformen ist die Tokenliste eine Tabelle oder ein Array.

Nach bevorzugten Ausführungsformen besteht jedes Element der Tokenliste aus drei Teilelementen der Struktur [Tokenadresse |Tokenwert | Vorkommensliste]. Die Vorkommensliste ist eine Sequenz, z.B. ein Array oder ein Vektor, von ein oder mehreren Zeigern. Die Zeiger weisen auf Datensätze, in welchen das Tokenlistenelement vorkommt. Die Zeiger können verknüpft mit zugehörigen Positionen des Auftretens der Einzeltoken oder Token des jeweilgen Tupels in der Sequenz gespeichert sein. Vorzugsweise sind die Zeiger in den Vorkommenslisten aller Tokenlistenelemente Datensatzadressen gleicher Länge, d.h., die Zeiger belegen alle die gleiche Anzahl an Bits in einem Datenspeicher. Dies kann vorteilhaft sein, da die Datenbankoperationen, insbesondere INTERSECT Operationen auf den Adressen, bei Vergleich von Adressen gleicher Länge besonders effizient ausgeführt werden können. Die Länge der Tokenwerte und die Anzahl der Zeiger kann dagegen eine variable Länge haben.

**Figur 12** zeigt ein I-Tupel mit Platzhaltern und Boolschen Operatoren. Beispielsweise kann das I-Tupel "habe-gebaut" in seinen Metadaten eine komplexe Spezifikation mehrerer Token-Platzhalter beinhalten, die mit Boolschen Operatoren verknüpft sind. Die Platzhalter können bestimmte Token oder Tokenklassen spezifizieren. Bei der automatischen Suche nach dem Vorhandensein eines solchen komplexen I-Tupels innerhalb eines Input-Datensatzes werden sowohl Positionsinformationen als auch die logischen Operatoren ausgewertet. Beispielsweise unterstützen einige DBMSs nicht nur Mengenoperationen, sondern auch Boolsche Operationen und Kombinationen davon und erlauben dadurch eine komplexe Suche nach dem Vorhandensein bestimmter Tokenmustern in einem Datensatz. Die Suche wird hierbei ausschließlich auf Basis der Zeiger und Positionsangaben innerhalb der Tokenliste durchgeführt, nicht auf den Rohdaten, und ist daher um ein Vielfaches schneller als eine konventionelle Patternsuche (Mustersuche, Ausdrucksuche) innerhalb eines Volltexts.

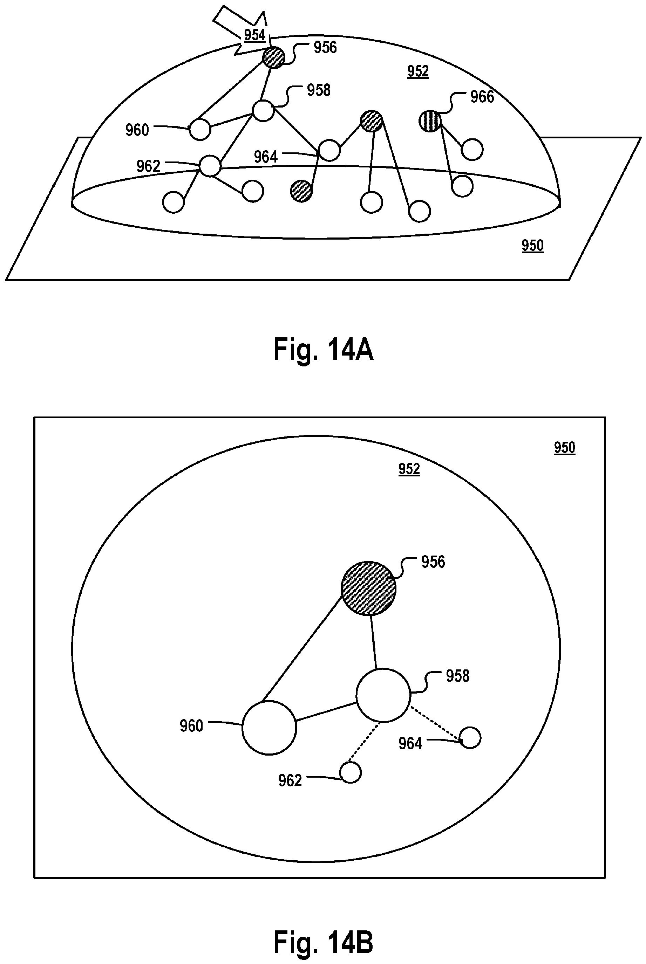

**Figur 14A** zeigt eine graphische Repräsentation des Modells als Graph (z.B. ein oder mehrere Netzwerke bzw. Bäume) innerhalb einer Halbkugel in Querschnittdarstellung. Einzelne Token sind als Knoten und Verlinkungen durch I-Tupel oder IO-Tupel als Kanten dargestellt. Der Umstand, dass sowohl Korrelationen innerhalb der Input-Datensätze (I-Tupel) als auch Korrelationen zwischen Inputtoken und Outputtoken (IO-Tupel) als Kanten repräsentiert sind, kann den Vorteil haben, dass ein Nutzer sowohl über innere Zusammenhänge der Eingangsseite (z.B. Sprachmuster der Ausgangssprache, korrelierende Statusänderungen von Komponenten komplexer Systeme, etc.) als auch über Zusammenhänge zwischen Eingangsdaten und Ausgangsdaten gleichermaßen informiert wird und beide Typen von Informationen in dem Netzwerk dargestellt sind. Optional kann das Netzwerk auch Kanten beinhalten, die O-Tupel repräsentieren.

Beispielsweise kann die Halbkugel 952 eine Ebene 950 zur Basis haben. In der Halbkugel befindet sich ein Netzwerk mehrerer über Kanten verbundener Knoten. Das Netzwerk repräsentiert die gelernten Korrelationen in Form von Kanten. Die Output-Token haben in Figur 14 A eine dunklere Schraffur als die Input-Token. Beispielsweise repräsentiert Knoten 956 ein Outputtoken, das mit den Inputtoken 960 und 958 über entsprechende Kanten (IO-Tupel) verbunden ist. Die Inputtoken wiederum sind jeweils über eine I-Tupel-Kante mit weiteren Inputtoken 962, 964 verbunden, die wiederum mit weiteren Knoten des Netzwerks verbunden sind.

Nach manchen Ausführungsformen kann das Netzwerk zudem Knoten 966 beinhalten, die jeweils ein IO-Tupel oder ein I-Tupel oder ein O-Tupel repräsentieren. Dies kann vorteilhaft sein, da hierdurch Beziehungen auf verschiedenen Komplexitätsebenen des Systems sichtbar gemacht werden können. Beispielsweise ist anhand einer graphischen Darstellung eines Netzwerks das sowohl Knoten für Einzeltoken als auch Knoten für IO-Tupel enthält, nicht nur eine Korrelationen des Zustands bestimmter einzelner Kühlaggregate und dem Zustand des Gesamtsystems erkennbar, sondern auch eine Korrelation mehrerer Kühlaggregate, die an der gleichen Stromversorgung angeschlossen sind und somit bei einem Stromausfall immer gemeinsam betroffen sind (und z.B. ein I-Tupel repräsentieren). Dieses I-Tupel korreliert mit dem Outputtoken "System verwendet Notkühlsystem" viel eindeutiger als ein einzelnes I-Token (ein Kühlaggregat ausgefallen), da das Notkühlaggregat in diesem Beispiel erst bei Ausfall von 4 Kühlaggregaten anspringt.

Die Halbkugel mit dem Netzwerk gemäß Figur 14A entspricht einer räumlichen Darstellung des Modells, die gemäß manchen Ausführungsformen der Erfindung auf einer GUI angezeigt wird, um dem Nutzer einen Überblick über die Größe, Topologie und den Inhalt der erlernten Korrelationen zu verschaffen.

Zusätzlich oder alternativ dazu kann die GUI eine graphische Repräsentation des Netzwerks in Form einer Aufsicht auf die Halbkugel mit dem Netzwerk haben wie in Figur 14B dargestellt.

Beispielsweise kann ein Nutzer über die Anzeige gemäß Figur 14A oder 14B einen der angezeigten Knoten auswählen (angedeutet durch den Auswahlpfeil 954), z.B. den Knoten 956. Dies bewirkt zumindest in der GUI gemäß 14 B eine vergrößerte oder anderweitig hervorgehobene Darstellung des ausgewählten Knotens sowie vorzugsweise zumindest dessen direkten Nachbarknoten ("Nachbarknoten der ersten Generation"). Die hervorgehobene Darstellung kann z.B. die Anzeige von Metadaten umfassen, die für andere Knoten nicht oder nur in verkürzter Form angezeigt werden. In manchen Ausführungsformen können auch die übernächsten Nachbarknoten ("Nachbarknoten der zweiten Generation") dargestellt werden, jedoch vorzugsweise noch kleiner und/oder weniger hervorgehoben als die direkten Nachbarknoten. Somit kann der Betrachter intuitiv im erlernten Machine-Learning Modell navigieren. Im Gegensatz zu bekannten Machine-Learning Ansätzen wie z.B. Neuronalen Netzen, in welchen das erlernte Wissen letztlich in der Netzwerkarchitektur verborgen bleibt ("Black Box") ermöglicht es die GUI gemäß Ausführungsformen der Erfindung, auf intuitive Weise innerhalb eines Graphen zu navigieren, welcher das automatisch während des Trainings erlernte Wissen repräsentiert. Die GUI gemäß Figur 14B zeigt also ein vom Nutzer ausgewähltes Teilnetz des Gesamtnetzes, das vorzugsweise dynamisch auf Basis der Tokenliste 700 errechnet wird. Durch Auswahl anderer Knoten kann der Nutzer auch ein anderes Teilnetz auswählen und so innerhalb des Netzwerks navigieren, wobei einzelne Token wie auch Token-Tupel n Teilgraph des gesamten Netzwerks.

Beispielsweise repräsentieren die Knoten eine Mischung aus Inputtoken, Outputtoken, IO-Tupeln und optional auch I-Tupeln und O-Tupeln. Dies kann vorteilhaft sein, da das Netzwerk dem Nutzer nicht nur erlernte Beziehungen zwischen Input- und Output-Datensätzen zeigt, sondern auch Beziehungen innerhalb der Inputdatensätze (I-Tupel) und innerhalb der Outputdatensätze.

Beispielsweise wird die hier beschriebene GUI zur Überwachung und/oder zur Fehleranalyse der gegenseitigen Abhängigkeit zweier komplexer, verteilter IT-Systeme verwendet, wobei die Input-Token Komponenten des ersten IT-Systems repräsentieren, die Output-Token Komponenten des zweiten IT-Systems, und IO-Tupel erlernte korrelierende Zustandsänderungen oder Zustände von Systemkomponenten des ersten und zweiten IT-Systems. Die hier beschriebene Form des maschinellen Lernens und die graphische Repräsentation des erlernten Modells über die GUI kann vorteilhaft sein, da nicht nur Korrelationen zwischen den beiden betrachteten Hauptsystemen (Input-Output-Komponenten) visualisiert werden, sondern auch automatisch erfasste Korrelationen von Zustandsänderungen oder Zuständen innerhalb des ersten oder zweiten IT-Systems. In manchen Fällen eröffnet erst das Erkennen und Visualisieren der "inneren" Systemzusammenhänge komplexer Systeme ein Verständnis der Zusammenhänge und Abhängigkeiten "zwischen" diesen Systemen.

**Figur 14B** zeigt eine graphische Repräsentation des Modells als Netzwerk innerhalb einer Halbkugel wie für Figur 14A beschrieben in der Draufsicht.

### Bezugszeichenliste

- 102: Input-Datensatz
- 104: Input-Token
- 106: Menge an Tokenzuordnungen (Tupel)
- 108: Output-Datensatz
- 110: Output-Token
- 116-120: IO-Tupel
- 122: prädiktives Modell
- 202-210: Input-Token
- 212: I-Tupel
- 218-226: Output-Token
- 228: O-Tupel
- 250: Computersystem
- 252: Tokenisierer
- 254: Prozessoren
- 256: Datenbank
- 258: Input-Datensätze
- 260: Output-Datensätze
- 262: Tokenliste
- 266: I-Tupel
- 268: IO-Tupel
- 270: Datenbankoperationen
- 272: Tupel-Kriterien, z.B. Maximalabstände
- 302: Menge an Input-Datensätze
- 304-312: Input-Datensätze
- 330: Menge an Output-Datensätzen
- 316-324: Output-Datensätze
- 334: I-Tupel
- 336: I-Tupel
- 338: Menge an I-Tupeln
- 340: O-Tupel
- 342: O-Tupel
- 344: Menge an O-Tupel
- 400: Tokenliste
- 402: Metadaten: Typ= Input-Token
- 404: Metadaten: Typ= Output-Token
- 406: Häufigkeitszähler
- 502: Schritt: Datenbank-INTERSECT-Operation
- 504: Schritt: statistische Auswertung der Koinzidenzen einschließlich Positionen
- 506: Schritt: Erstellung neuen I-Tupels
- 508: Input-Token
- 510: Input-Token
- 602: Schritt: Datenbank-INTERSECT-Operation
- 604: Schritt: statistische Auswertung der Koinzidenzen einschließlich Positionen
- 606: Schritt: Erstellung neuen IO-Tupels
- 610: Output-Token
- 700: Tokenliste mit numerischen Token-IDs
- 702: Token-ID-Tabelle
- 930: Tabelle mit zeilenweise gespeicherten Datensätzen
- 932: redundante Tokenliste
- 934: nicht-redundante Tokenliste
- 936: Tabelle mit I-Tupeln
- 950: Fläche
- 952: Halbkugeldarstellung auf GUI
- 954: Auswahl von Knoten durch Nutzer über GUI
- 956: Knoten für Output-Token
- 956-964: Knoten für Input-Token
- 966: Knoten für IO-Tupel
- 1302-1314: Schritte

## Patentansprüche

1. Ein computer-implementiertes Verfahren zur Erzeugung eines prädiktiven Modells durch maschinelles Lernen, umfassend:
- Bereitstellung (1302) einer Vielzahl von Input-Datensätzen und Output-Datensätzen, wobei jeder der Output-Datensätze einem der Input-Datensätze zugeordnet ist;
- Tokenisierung (1304) der Input-Datensätze, um für jeden der Input-Datensätze eine Liste an Inputtoken samt deren Position innerhalb ihres jeweiligen Input-Datensatzes zu erhalten;
- Tokenisierung (1306) der Output-Datensätze, um für jeden der Output-Datensätze eine Liste an Outputtoken samt deren Position innerhalb ihres jeweiligen Output-Datensatzes zu erhalten;
- Speicherung (1308) aller Inputtoken und aller Outputtoken in Form einer nicht-redundanten Tokenliste (262, 934, 400, 700) in einer Datenbank, wobei Elemente dieser Tokenliste jeweils einen der Inputtoken oder einen der Outputtoken repräsentieren, und wobei die Elemente jeweils Zeiger auf alle Datensätze, die das von diesem Element repräsentierte Token enthalten, sowie die Position dieses Tokens innerhalb des jeweiligen Datensatzes, enthalten;
- Anwenden (1312) von Datenbank-internen Mengenoperationen durch die Datenbank auf zumindest Teile der Einträge der Tokenliste, um Inputtoken-Outputtoken-Tupel - im Folgenden IO-Tupel genannt - zu identifizieren, die jeweils mindestens ein Inputtoken und mindestens ein Outputtoken beinhalten, wobei alle Token der Inputtoken-Outputtoken-Tupel in den einander zugeordneten Input-Datensätzen und Output-Datensätzen korreliert auftreten; und
- Speichern (1314) der identifizierten IO-Tupel als Bestandteil eines prädiktiven Modells, wobei das prädiktive Modell dazu ausgebildet ist, in Antwort auf eine Eingabe eines neuen Input-Datensatzes mit zumindest einem Inputtoken einen neuen Output-Datensatz zurückzugeben, wobei der zurückgegebene Output-Datensatz zumindest ein Outputtoken enthält, welches dasjenige der bereits der Tokenliste gespeicherten Outputtoken ist, das gemäß den IO-Tupeln mit dem zumindest einen Inputtoken am stärksten korreliert auftritt.

2. Das computer-implementierte Verfahren nach Anspruch 1, wobei die Zeiger, die mit jedem Element der Tokenliste verknüpft gespeichert sind, je innerhalb eines Arrays von Zeigern vorgegebener Länge gespeichert sind.

3. Das computer-implementierte Verfahren nach einem der vorigen Ansprüche, wobei die Vielzahl von Input-Datensätzen und Output-Datensätzen bei ihrer Bereitstellung verteilt in verschiedenen Datenbanken gespeichert sind, wobei zumindest zwei der Datenbanken auf verschiedenen Datenverarbeitungsgeräten instanziiert sind, die über ein Netzwerk miteinander verbunden sind, wobei die Zeiger in der Tokenliste jeweils eine Adresse bezeichnen, die neben dem Datensatz auch die Datenbank und das Computersystem identifiziert, welche den Datensatz beinhalten.

4. Das computer-implementierte Verfahren nach einem der vorigen Ansprüche, wobei die Zeiger in der Tokenliste jeweils eine Adresse einer vordefinierten Bitlänge bezeichnen, wobei:
- eine erste Reihe ein oder mehrerer Bitpositionen der Bitlänge eine Hardwareadresse eines Datenverarbeitungsgeräts identifiziert, welches den Datensatz erfasst hat und/oder aktuell bereitstellt; und
- eine zweite Reihe ein oder mehrerer Bitpositionen der Bitlänge die Datenbank identifiziert, welches den Datensatz beinhaltet; und
- eine dritte Reihe ein oder mehrerer Bitpositionen der Bitlänge den Datensatz innerhalb der Datenbank identifiziert.

5. Das computer-implementierte Verfahren Anspruch 4, ferner umfassend:
- automatische Identifikation der Registergröße der Prozessorarchitektur von ein oder mehreren Prozessoren des Computersystems, auf welchem die Datenbank mit der Tokenliste instanziiert ist, wobei die Registergröße insbesondere 32Bit, 64 Bit, 128 Bit, 256 Bit oder 512 Bit ist;

6. Kodieren der Zeiger für die Speicherung in der Tokenliste so, dass die vordefinierte Bitlänge jedes Zeigers der identifizierten Registergröße entspricht. Das computer-implementierte Verfahren nach einem der vorigen Ansprüche, wobei jedes der IO-Tupel verknüpft mit ein oder mehreren Zeiger auf alle Input-Datensätze, die die Input-Token enthalten und mit ein oder mehreren Zeigern auf alle Output-Datensätze, die die Output-Token dieses IO-Tupels enthalten, gespeichert wird, wobei jedes der IO-Tupel zudem die Positionen der Inputtoken innerhalb dieser Input-Datensätze und die Positionen der Outputtoken innerhalb dieser Output-Datensätze enthält.

7. Das computer-implementierte Verfahren nach einem der vorigen Ansprüche, ferner umfassend:
- Identifikation eines bereits im prädiktiven Modell enthaltenen IO-Tupels, dessen Inputtoken sämtlich in dem neuen Input-Datensatz enthalten sind, und das mindestens zwei Output-Token enthält;
- Anwenden von Datenbank-internen arithmetischen Operatoren durch die Datenbank auf die Positionen der zumindest zwei Outputtokens des identifizierten IO-Tupels in mehreren der Output-Datensätze, um eine aggregierte relative Position der zumindest zwei Output-Token dieses IO-Tupels zu bestimmen; und
- Erzeugung des zurückgegebenen Output-Datensatzes so, dass dieser die zwei oder mehr Outputtoken an einer bestimmten relativen Position zueinander beinhaltet, wobei die bestimmte relative Position die aggregierte relative Position ist oder als Funktion der aggregierten relativen Position berechnet wird.

8. Computerimplementiertes Verfahren nach einem der vorangehenden Ansprüche, wobei das Verfahren ferner umfasst:
- Anwenden von Datenbank-internen Mengenoperationen durch die Datenbank auf die Zeiger in der Tokenliste, um Inputtoken-Tupel - im Folgenden I-Tupel - zu identifizieren, die aus mindestens zwei Inputtoken bestehen, die in der Vielzahl der Input-Datensätze korreliert auftreten;
- Speichern der identifizierten I-Tupel als Bestandteil des prädiktiven Modells; und
- Verwenden zumindest einiger der I-Tupel als Basis bei der Identifikation der IO-Tupel in einem späteren Training des Modells, wobei die in einem I-Tupel enthaltenen Inputtoken zumindest einige oder die Gesamtheit der Inputtoken eines IO-Tupel stellen, und wobei die Outputtoken diejenigen der Outputtoken der Tokenliste sind, die in den einander zugeordneten Input-Datensätzen und Output-Datensätzen korreliert mit den Input-Token des I-Tupels auftreten.

9. Computerimplementiertes Verfahren nach einem der vorigen Ansprüche, ferner umfassend:
- Empfang weiterer einander zugeordneter Paare von Inputdatensätzen und Outputdatensätzen;
- Automatische Erzeugung eines neuen IO-Tupels mit einem oder mehreren Inputtoken und/oder I-Tupeln und ein oder mehreren Outputtoken, wenn alle in dem neuen IO-Tupel enthaltenen Inputtoken und Outputtoken ein Mindestmaß an korreliertem Auftreten in den einander zugewiesenen Paaren an Input-Datensätzen und Output-Datensätzen einschließlich der empfangenen weiteren Paaren aufweisen; und
- Speicherung des neuen IO-Tupels als weiteres IO-Tupel in das prädiktive Modell.

10. Computerimplementiertes Verfahren nach einem der vorigen Ansprüche, wobei das Verfahren ferner umfasst:
- Speicherung des IO-Tupels nur dann in das prädiktive Modell, wenn die relativen Positionen der Inputtoken und/oder die relativen Positionen der Outputtoken des neuen IO-Tupels ein Zusatzkriterium bezüglich der relativer Position dieser Token erfüllen; und/oder
Speicherung eines I-Tupels nur dann in das prädiktive Modell, wenn die relativen Positionen der miteinander korrelierenden Inputtoken ein Zusatzkriterium bezüglich deren relativer Position dieser Token erfüllen;
wobei das Zusatzkriterium insbesondere ausgewählt ist aus einer Gruppe umfassend:
i. ein maximal erlaubter Tokenabstand oder ein erlaubter Positionsabstandsbereich;
ii. eine maximal erlaubte Variabilität der in den Datensätzen beobachteten Tokenabstände;
iii. Eine Anordnung von ein oder mehreren der in dem Tupel enthaltenen Token gemäß einer bestimmten Reihenfolge unter Wahrung vorgegebener Tokenpositionsabstände.

11. Das computer-implementierte Verfahren nach einem der vorigen Ansprüche,, ferner umfassend:
- Empfang des neuen Input-Datensatzes;
- Tokenisierung des neuen Input-Datensatzes, um weitere Inputtoken samt deren Position innerhalb des neuen Input-Datensatzes zu erhalten;
- Anwendung des prädiktiven Modells auf die weiteren Inputtoken, um den neuen Output-Datensatz zu erzeugen; und
- Zurückgabe des neuen Output-Datensatzes;
- wobei das Verfahren ferner umfasst:
- Analyse des empfangenen neuen Input-Datensatzes, ob darin I-Tupel oder einzelne Inputtoken vorkommen, die in dem prädiktiven Modell bereits gespeichert sind, wobei die Analyse mit denjenigen I-Tupeln und Inputtoken beginnt, die am häufigsten innerhalb der Vielzahl an Input-Datensätzen vorkommen;
- wenn in dem empfangenen Input-Datensatz ein existierendes I-Tupel enthalten ist, Erhöhung eines Häufigkeitszählers dieses I-Tupels und Speicherung eines Zeigers zu dem neuen Input-Datensatz verknüpft mit dem I-Tupel;
- Wenn in dem Input-Datensatz ein in der Tokenliste bereits existierendes Inputtoken enthalten ist, Aktualisierung des Eintrags dieses Inputtokens in der Tokenliste und Ergänzung dieses Eintrags um einen Zeiger zu dem neuen Input-Datensatz;
- Ergänzung der Tokenliste um alle Inputtoken des neuen Input-Datensatzes, die nicht bereits in der Tokenliste erhalten waren.

12. Das computer-implementierte Verfahren nach einem der vorigen Ansprüche, ferner umfassend:
- Erzeugung eines ersten prädiktiven Modells durch maschinelles Lernen auf ersten Input-Datensätzen und ersten Output-Datensätzen gemäß einem der Ansprüche 1-11;
- Erzeugung eines zweiten prädiktiven Modells durch maschinelles Lernen auf zweiten Input-Datensätzen und zweiten Output-Datensätzen gemäß einem der Ansprüche 1-11, wobei die ersten Input- und Output-Datensätze zumindest teilweise verschieden sind zu den zweiten Input- und Output-Datensätzen;
- Erzeugung eines fusionierten prädiktiven Modells durch:
• Erzeugen einer fusionierten, nicht-redundanten Tokenliste als einer Kombination der Tokenliste des ersten und zweiten Modells;
• Anwenden von Datenbank-internen Mengenoperationen durch die Datenbank auf die Zeiger in der fusionierten Tokenliste , um IO-Tupel zu identifizieren, die mindestens ein Inputtoken und mindestens ein Outputtoken beinhalten, wobei alle Token der IO-Tupel in den einander zugeordneten Input-Datensätzen und Output-Datensätzen korreliert auftreten; und
• Speichern der identifizierten IO-Tupel als Bestandteil des fusionierten prädiktiven Modells.

13. Das computer-implementierte Verfahren nach einem der vorigen Ansprüche, wobei die Input-Datensätze, die Output-Datensätze und das prädiktive Modell ausgewählt sind aus einer Gruppe umfassend:
- natürlichsprachliche Sätze einer Eingangssprache, natürlichsprachliche Sätze einer Zielsprache, ein Übersetzungsprogramm von der Eingangssprache in die Zielsprache;
- Log-Einträge von Zustandsänderungen erster technischer Systeme, verschiedene operative Zustände eines technischen Gesamtsystems, ein Programm zur Vorhersage des operativen Zustands des technischen Gesamtsystems auf Basis der Log-Einträge.

14. Ein Computerprogramm ausgebildet zur Durchführung eines Verfahrens nach einem der vorigen Ansprüche.

15. Ein Computersystem, das operativ an eine Datenbank gekoppelt ist,
- wobei das Computersystem eine Lernsoftware beinhaltet, die dazu ausgebildet ist, ein Verfahren gemäß eines der Ansprüche 1-13 durchzuführen, um ein prädiktives Modell automatisch zu erzeugen; und/oder
- wobei die Datenbank ein prädiktives Modell beinhaltet, das zumindest eine Tokenliste mit Inputtoken, Outputtoken und IO-Tupeln beinhaltet, wobei das Computersystem eine Vorhersagesoftware beinhaltet, die das Modell zur Berechnung einer Vorhersage für einen Inputdatensatz verwendet, wobei der Inputdatensatz Inputtoken der Tokenliste beinhaltet, wobei die Vorhersagesoftware dazu ausgebildet ist, das Modell zu nutzen, um eine Vorhersage in Form eines Outputdatensatz mit Outputtoken zu berechnen, wobei die Vorhersagesoftware dazu ausgebildet ist, die Outputtoken des Outputdatensatzes als diejenigen Outputtoken zu identifizieren, die mit Input-Token des Inputdatensatzes in IO-Tupeln des Modells enthalten sind, wobei das Modell insbesondere in einem Verfahren gemäß eines der Ansprüche 1-20 erzeugt wurde; und/oder
- wobei das Computersystem mehrere der besagten Computersysteme beinhaltet, wobei die Computersysteme über eine Netzwerkverbindung miteinander verbunden sind.
